# EUROPEAN PATENT SPECIFICATION

(11) **EP 2 583 886 B1**
(45) Date of publication and mention of the grant of the patent: **02.03.2016**
(21) Application number: 12187720.3
(22) Date of filing: 09.10.2012
(51) Int. Cl.: B62J 13/00, B62J 23/00

(54) **Two-wheeled motor vehicle**
Zweirädriges Fahrzeug
Véhicule à moteur à deux roues

(30) Priority: 17.10.2011 JP 2011227806; 04.11.2011 JP 2011242254
(43) Date of publication of application: 24.04.2013
(73) Proprietor: Yamaha Hatsudoki Kabushiki Kaisha, Iwata-shi, Shizuoka 438-8501 (JP)
(72) Inventor: Shigetomi, Yuya, Iwata-shi, Shizuoka 438-8501 (JP); Tominaga, Shuji, Iwata-shi, Shizuoka 438-8501 (JP); Oono, Takashi, Iwata-shi, Shizuoka 438-8501 (JP); Taniguchi, Takashi, Iwata-shi, Shizuoka 438-8501 (JP); Ito, Yoshiaki, Iwata-shi, Shizuoka 438-8501 (JP)
(74) Representative: Grünecker Patent- und Rechtsanwälte PartG mbB

(56) References cited:
- JP-A- 2010 137 843
- JP-A- 2011 195 138
- JP-Y2- S6 021 342
- US-A1- 2007 296 378

## Description

The present invention relates to a two-wheeled motor vehicle which transmits power from an output shaft of an engine unit to a drive wheel through a toothed belt.

Conventionally, there are two-wheeled motor vehicles each having a rear arm for rotatably supporting a rear wheel, a drive pulley mounted on an output shaft of an engine unit, a driven pulley rotatable with the rear wheel, and a toothed belt wound around the drive pulley and driven pulley (which are disclosed in Japanese Unexamined Patent Publication No. 2011-195138 and Japanese Utility Model Publication S60-21342, for example).

Technique of Japanese Unexamined Patent Publication No. 2011-195138, considered the closest prior at as in the preamble of claim 1.

In the two-wheeled motor vehicle described in Japanese Unexamined Patent Publication No. 2011-195138, the rear arm is supported at a forward portion thereof to be rotatable about a pivot shaft, with a rearward portion of the rear arm supporting the rear wheel. The pivot shaft of the rear arm is coaxial with the output shaft of the engine unit. The drive pulley is mounted on the output shaft of the engine unit, and the driven pulley is attached to the rear wheel. The toothed belt is wound around the drive pulley and driven pulley. The rear arm is inclined transversely of the vehicle body from the pivot shaft toward the rearward portion, so that the positional relationship transversely of the vehicle body between the toothed belt and the rear arm is different at the forward portion and at the rearward portion of the rear arm. Specifically, the forward portion of the rear arm is located to one side adjacent the rear wheel of the toothed belt (i.e. inward of the toothed belt transversely of the vehicle body), and the rearward portion of the rear arm is located to the other side, which is opposite to the one side noted above, of the toothed belt (i.e. outward of the toothed belt transversely of the vehicle body). When seen from above, the rear arm and the toothed belt cross each other. The rear arm has an upper belt cover and a lower belt cover attached thereto. Each belt cover is located outward of the toothed belt transversely of the vehicle body.

Technique of Japanese Utility Model Publication S60-21342

In the two-wheeled motor vehicle described in Japanese Utility Model Publication S60-21342, the pivot shaft of the rear arm is located rearward of a rotary shaft of the drive pulley. The rear arm has a dust guard. The dust guard has a vertical side and a horizontal side. The vertical side is disposed to a side adjacent the rear wheel (i.e. inward transversely of the vehicle body) of a lower belt portion of the toothed belt. The horizontal side is disposed between the lower belt portion and the rear arm. This dust guard can protect the toothed belt (lower belt portion) from pebbles, mud and the like (hereinafter called "stones and the like") which collide with a rear fender and rebound downward or sideways therefrom.

In order to block the stones and the like rebounding from the rear fender, it is conceivable, for example, to apply the dust guard described in Japanese Utility Model Publication S60-21342 to the two-wheeled motor vehicle described in Japanese Unexamined Patent Publication No. 2011-195138.

In the two-wheeled motor vehicle described in Japanese Unexamined Patent Publication No. 2011-195138, since the pivot shaft of the rear arm and the output shaft of the engine unit are coaxial, the forward portion of the rear arm extends to a position to overlap the drive pulley in side view. Therefore, the rear arm is vertically close to the upper and lower belt portions, compared with the case of the two-wheeled motor vehicle of Japanese Utility Model Publication S60-21342. Further, in the two-wheeled motor vehicle described in Japanese Unexamined Patent Publication No. 2011-195138, the positional relationship transversely of the vehicle body between the rear arm and the toothed belt greatly varies with the position in the fore and aft direction.

In the two-wheeled motor vehicle of Japanese Unexamined Patent Publication No. 2011-195138, stones and the like rebounding not only from the rear fender but also from the rear arm could make toward the toothed belt. Especially since the rear arm is close to the upper and lower belt portions, respectively, stones and the like rebounding from the rear arm may reach the toothed belt without losing impetus. Further, in the two-wheeled motor vehicle of Japanese Unexamined Patent Publication No. 2011-195138, the positional relationship transversely of the vehicle body between the rear arm and toothed belt greatly varies, and therefore the stones and the like rebounding from the rear arm could disperse in various directions. The upper and lower belt portions could be subjected to the stones and the like flying from various directions. Therefore, with the two-wheeled motor vehicle of Japanese Unexamined Patent Publication No. 2011-195138, the stones and the like rebounding from the rear arm, if anything, have a greater influence on the toothed belt than those rebounding from the rear fender.

Based on the above findings, it is difficult to protect the toothed belt even if the dust guard for protecting the toothed belt from stones and the like rebounding from the rear fender is simply applied to the two-wheeled motor vehicle of Japanese Unexamined Patent Publication No. 2011-195138.

It is an object of the present invention to provide a two-wheeled motor vehicle which can effectively protect a toothed belt while having a swing arm swingable about an output shaft of an engine unit.

This object is solved by a two-wheeled motor vehicle according to claim 1. Preferred embodiments are laid down in the dependent claims.

Accordingly, it is provided a two-wheeled motor vehicle comprising:
a swing arm swingable about a pivot shaft coaxial with an output shaft of an engine unit;
a drive wheel rotatably supported by a rear portion of the swing arm;
a drive pulley mounted on the output shaft;
a driven pulley rotatable with the drive wheel;
a toothed belt wound around the drive pulley and the driven pulley; and
a belt cover for protecting the toothed belt;
wherein a forward portion of the swing arm is located, in plan view, at one side opposed to the drive wheel of the toothed belt, and
a rearward portion of the swing arm is located, in plan view, at the other side opposite the one side of the toothed belt,
whereby the swing arm crosses the toothed belt in plan view; and
wherein the belt cover includes:
   an inner wall portion located at the one side of the toothed belt and vertically ranging from above an upper belt portion of the toothed belt passing, in side view, above an imaginary line extending through a center of rotation of the drive pulley and a center of rotation of the driven pulley, to below a lower belt portion of the toothed belt passing, in side view, below the imaginary line, thereby separating the toothed belt and the drive wheel;
   an upper wall portion located above the upper belt portion; and
   a bottom wall portion located below the lower belt portion.

In the two-wheeled motor vehicle of the present teaching, the pivot shaft of the swing arm is coaxial with the output shaft of the engine unit. Therefore, the swing arm is located close to the upper belt portion and the lower belt portion, respectively. The swing arm crosses the toothed belt in plan view. Thus, the positional relationship in the transverse direction of the vehicle body between the swing arm and the toothed belt varies greatly with positions in the fore and aft direction.

With an up-and-down motion of the drive wheel, the swing arm swings about the pivot shaft. The output shaft rotates the drive pulley. The rotative power of the drive pulley is transmitted to the driven pulley through the toothed belt. The driven pulley is driven to rotate with the drive wheel.

The inner wall portion of the belt cover separates the toothed belt and the drive wheel over an area vertically ranging from above the upper belt portion to below the lower belt portion. Consequently, the inner wall portion can effectively block stones and the like flying from the drive wheel to both the toothed belt and the swing arm. The belt cover further including the upper wall portion and bottom wall portion in addition to the above-mentioned inner wall portion can protect the toothed belt conveniently, and can further prevent collision itself of stones and the like with the swing arm, as with the upper belt portion and lower belt portion, thereby to eliminate the possibility of the stones and the like colliding with and rebounding from the swing arm.

Therefore, even though the swing arm is close to the upper belt portion and lower belt portion, and even though the positional relationship in the transverse direction of the vehicle body between the swing arm and the toothed belt varies greatly with positions in the fore and aft direction, the above belt cover can protect the toothed belt appropriately.

As described above, the two-wheeled motor vehicle including the belt cover having the inner wall portion, upper wall portion and bottom wall portion can effectively protect the toothed belt while having the swing arm swingable about the pivot shaft coaxial with the output shaft of the engine unit.

Hereinafter, the present invention is illustrated and explained by means of preferred embodiments in conjuction with the accompanying drawings. In the drawings wherein:
Fig. 1 is a side view showing a left side of a two-wheeled motor vehicle according to Embodiment 1;
Fig. 2 is a sectional view taken on line a-a of Fig. 1;
Fig. 3 is a left side view of a principal portion with an upper cover and other components omitted;
Fig. 4 is a side view of a drive pulley, a driven pulley and a toothed belt;
Fig. 5 is an enlarged view of left sides of a rear end of a swing arm and an axle;
Fig. 6 is a perspective view showing a groove;
Fig. 7 is a perspective view showing an example of use of the groove;
Fig. 8 is an exploded perspective view of a belt cover;
Fig. 9 is a view showing principal portions of the belt cover and other components seen from above;
Fig. 10 is a front view of an inner cover seen from a left side in a transverse direction of a vehicle body;
Fig. 11 is a sectional view, taken on line b-b of Fig. 1, of the belt cover and other components;
Fig. 12 is a sectional view, taken on line c-c of Fig. 1, of the belt cover and other components;
Fig. 13 is a view showing positions of discharge bores of a lower cover;
Fig. 14 is a sectional view, taken on line b-b of Fig. 1, of a belt cover in Embodiment 2;
Fig. 15 is a sectional view, taken on line c-c of Fig. 1, of the belt cover in Embodiment 2;
Fig. 16A is an exploded perspective view of an inner cover and a holding member;
Fig. 16B is an exploded perspective view of an upper cover and a holding member;
Fig. 16C is an exploded perspective view of a lower cover and a holding member; and
Fig. 17 is a sectional view, taken on line a-a of Fig. 1, of a two-wheeled motor vehicle in Embodiment 2.

### DESCRIPTION OF THE PREFERRED EMBODIMENTS

Preferred embodiments will be described in detail hereinafter with reference to the drawings.

### EMBODIMENT 1

### 1. Outline construction of two-wheeled motor vehicle

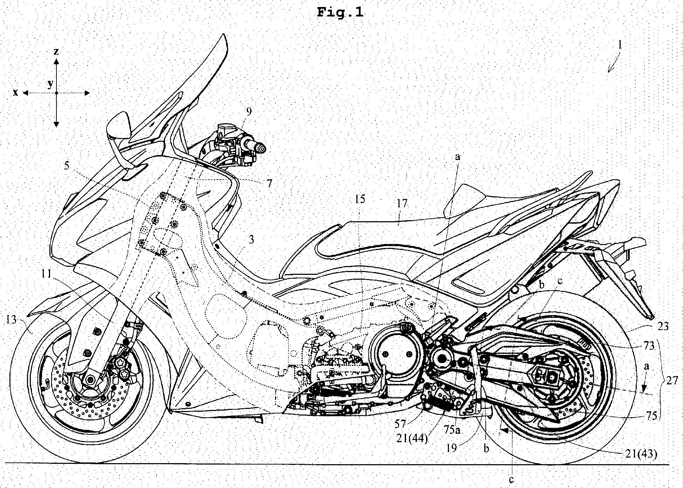

Reference is made to Fig. 1. Fig. 1 is a side view showing a left side of a two-wheeled motor vehicle 1 according to Embodiment 1. Fig. 1 shows in dotted lines positions of a main frame and an engine in a body cover, omitting part of an outward appearance of the two-wheeled motor vehicle 1.

In Fig. 1, x-direction is the fore and aft direction of a vehicle body, y-direction is the transverse direction of the vehicle body, and z-direction is the vertical direction of the vehicle body. Fig. 1 shows the front of the two-wheeled motor vehicle 1 on the left side thereof, and the rear of the two-wheeled motor vehicle 1 on the right side. In this specification, a simple reference to right or left means "right" or "left" for the rider seated on the two-wheeled motor vehicle 1.

The two-wheeled motor vehicle 1 has a body frame 3. A head tube 5 is disposed at a front end of the body frame 3. The head tube 5 has a steering shaft 7 rotatably extending therethrough. A handlebar 9 is attached to an upper end of the steering shaft 7. A front fork 11 is attached to a lower end of the steering shaft 7. A single front wheel 13 is rotatably supported at a lower end of the front fork 11. The front wheel 13 is a driven wheel. The front wheel 13 is dirigible by operation of the handlebar 9.

An engine unit 15 is fixed to the body frame 3. A seat 17 for seating the rider is disposed above the engine unit 15. A main stand 19 is pivotably supported at the rear of the engine unit 15. A forward portion of a swing arm 21 is swingably supported at the rear of the engine unit 15. A rear wheel 23 is rotatably supported by a rearward portion of the swing arm 21. The rear wheel 23 is a drive wheel. The swing arm 21 has a belt cover 27 fixed thereto. The belt cover 27 includes an upper cover 73 and a lower cover 75 which present part of an outward appearance of the left side of the two-wheeled motor vehicle 1 (details thereof will be described hereinafter).

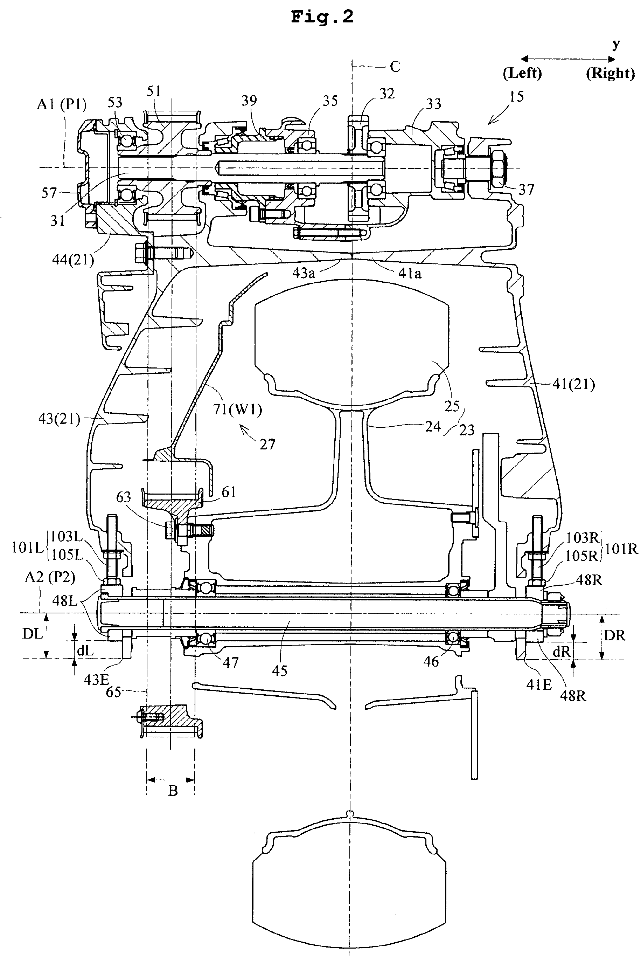

Reference is made to Fig. 2. Fig. 2 is a sectional view taken on line a-a of Fig. 1. Fig. 2 shows only the transverse direction y of the vehicle body, and for convenience, "Right" indicates the right side in the transverse direction y, and "Left" indicates the left side in the transverse direction y. Sign "C" denotes a body centerline of the two-wheeled motor vehicle 1. In this specification, the reference simply to "inner" or to "inward in the transverse direction y" indicates one direction transversely of the vehicle body toward the body centerline C. Conversely, the reference simply to "outer" or to "outward in the transverse direction y" indicates the other direction transversely of the vehicle body (i.e. away from the body centerline C).

As shown in Fig. 2, the engine unit 15 has an output shaft 31 disposed in a rear portion thereof and extending parallel to the transverse direction y. The output shaft 31 is rotatably supported by a right engine case 33 and a left engine case 35. The output shaft 31 has an output shaft gear 32 fixed thereto. The output shaft gear 32 is meshed with a gear not shown. Through this gear, power generated in the engine unit 15 is transmitted to the output shaft 31.

The swing arm 21 is shaped to sandwich the rear wheel 23 between opposite, right and left sides thereof. The swing arm 21 includes a right swing arm 41, a left swing arm 43 and an output shaft cover 44. The right swing arm 41 extends rearward along the right side of the rear wheel 23, and the left swing arm 43 extends rearward along the left side of the rear wheel 23. The right swing arm 41 and left swing arm 43 are connected by mounting bosses 41a and 43a to be swingable together. The output shaft cover 44 is fixed to the left swing arm 43 to be swingable with the respective swing arms 41 and 43. The left swing arm 43 and output shaft cover 44 correspond to the belt-side swing arm portion. The left swing arm 43 corresponds to the belt-side swing arm portion.

The forward portion of the swing arm 21 noted above is formed of a forward portion of the right swing arm 41 and a forward portion of the left swing arm 43. The forward portion of the right swing arm 41 is rotatably supported by a rear portion of the right engine case 33 through a bolt 37. A tubular holder 39 is fixed to an outer surface at a rear portion of the left engine case 35. The forward portion of the left swing arm 43 is rotatably supported by an outer periphery of the holder 39. The bolt 37 and holder 39 correspond to a pivot shaft of the right swing arm 41 and left swing arm 43. The right swing arm 41 and left swing arm 43 have a swing axis thereof coinciding with the center A1 of the output shaft 31. That is, the pivot shaft of the swing arm 21 is coaxial with the output shaft 31. Further, the swing arm 21 has a cushion unit, not shown, interlocked thereto.

An axle 45 is supported by the rear portion of the swing arm 21. The axle 45 is parallel to the transverse direction y. The rear wheel 23 is supported by the axle 45 to be rotatable about a rear wheel axis A2. The rear wheel 23 has a wheel 24 and a tire 25. The axle 45 is inserted in the wheel 24. The wheel 24 is supported by the axle 45 through ball bearings 46 and 47 to be rotatable relative to the outer peripheral surface of the axle 45.

Thus, the swing arm 21 rotatably supports the rear wheel 23. When the rear wheel 23 moves substantially in the vertical direction z, the swing arm 21 will swing about the pivot shaft (37, 39) coaxial with the output shaft 31.

The output shaft 31 projects from inside the left engine case 35. The output shaft 31 extends leftward in the transverse direction y from the left engine case 35, and penetrates the holder 39. A left end of the output shaft 31 reaches a position leftward of the holder 39.

A drive pulley 51 is fixed to the left end of the output shaft 31. The center of rotation of the drive pulley 51 coincides with the center A1 of the output shaft 31. The drive pulley 51 is a spur gear having a plurality of teeth on the outer peripheral surface thereof. The drive pulley 51 has a constant diameter and is not a variable diameter pulley used in what is called a continuously variable transmission.

The output shaft cover 44 is rotatably attached to a left end of the drive pulley 51 through a bearing 53. An elastic cap 56 is fitted in an opening of the output shaft cover 44. The elastic cap 56 is deformable in response to a pressure in a closed space formed between the elastic cap 56 and output shaft cover 44. The elastic cap 56 is formed of rubber, for example. An output shaft cap 57 is fixed to the output shaft cover 44 in a way to cover the opening of the output shaft cover 44 from over the elastic cap 56.

A driven pulley 61 is attached to the rear wheel 23. The driven pulley 61 is fixed to a left end of the wheel 24 by bolts 63, to be rotatable with the rear wheel 23. A rearward portion of the left swing arm 43 is located to the left of the driven pulley 61. The driven pulley 61 is a spur gear having a plurality of teeth on the outer peripheral surface thereof. The driven pulley 61 has a constant diameter and is not a variable diameter pulley used in what is called a continuously variable transmission. The diameter of the driven pulley 61 is larger than that of the drive pulley 51.

A toothed belt 65 is wound around the drive pulley 51 and driven pulley 61. The toothed belt 65 extending between the drive pulley 51 and driven pulley 61 is substantially parallel to the fore and aft direction x when seen from above. In this specification, the term "in plan view" is used to indicate not only a view seen from above in strictly the vertical direction z, but includes also a view seen from an approximately upper position. The toothed belt 65 is located to the left of the rear wheel 23. In Embodiment 1, the term "one side adjacent the rear wheel 23 of the toothed belt 65" indicates the right side in the transverse direction y, and term "the other side opposite the one side of the toothed belt 65" indicates the left side in the transverse direction y.

The position in the transverse direction y of the left swing arm 43 is inclined leftward (outward) from front to rear. In other words, the left swing arm 43 is curved from front to rear to bulge outward in the transverse direction y.

A positional relationship to the toothed belt 65 of the left swing arm 43 also is reversed between front and rear of the left swing arm 43. That is, in plan view, the front of the left swing arm 43 is located to the right of the toothed belt 65, while the rear of the left swing arm 43 is located to the left of the toothed belt 65. In other words, with respect to the transverse direction y, the rear wheel 23 and the front of the left swing arm 43 are both located at the same side (at one side (right side)) of the toothed belt 65, while the rear of the left swing arm 43 is located at the other side (left side) opposite the one side of the toothed belt 65. As a result, the left swing arm 43 crosses the toothed belt 65 in plan view.

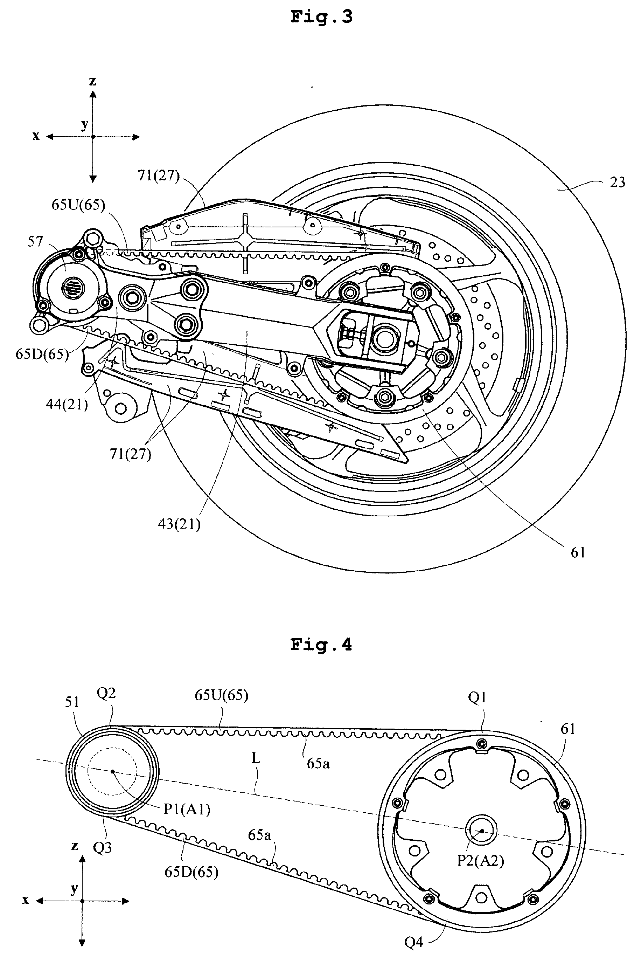

Reference is made to Figs. 3 and 4. Fig. 3 is a left side view of a principal portion with the upper cover 73 and lower cover 75 removed. Fig. 4 is a side view of the drive pulley 51, driven pulley 61 and toothed belt 65. As seen, the toothed belt 65 is an annular belt and has belt teeth 65a (see Fig. 4). The belt teeth 65a mesh with the teeth of the drive pulley 51 and the teeth of the driven pulley 61, respectively. The toothed belt 65 may be formed of rubber, metal or resin.

In this specification, an "upper belt portion 65U" (loaded side of the belt) refers to a portion of the toothed belt 65 which, in side view, passes above an imaginary line L extending through a center of rotation P1 of the drive pulley 51 and a center of rotation P2 of the driven pulley 61, and a "lower belt portion 65D" (loose side of the belt) refers to a portion of the toothed belt 65 which, in side view, passes below the imaginary line L. The center of rotation P1 coincides with the center A1 of the output shaft 31. The center of rotation P2 coincides with the rear wheel axis A2 of the rear wheel 23.

The upper belt portion 65U and lower belt portion 65D can also be described as follows. The toothed belt 65 extending between an upper portion of the drive pulley 51 and an upper portion of the driven pulley 61 is called the "upper belt portion 65U", and the toothed belt 65 extending between a lower portion of the drive pulley 51 and a lower portion of the driven pulley 61 is called the "lower belt portion 65D". It is also possible that the toothed belt 65 which, in side view, passes above the left swing arm 43 is called the "upper belt portion 65U", and that the toothed belt 65 which, in side view, passes below the left swing arm 43 is called the "lower belt portion 65D".

As clearly shown in Figs. 3 and 4, both the upper belt portion 65U and lower belt portion 65D refer to portions in contact with neither of the pulleys 51 and 61 (i.e. portions separated from both the pulleys 51 and 61). Therefore, all portions of the toothed belt 65 other than the upper belt portion 65U and lower belt portions 65D are in contact with either one of the pulleys 51 and 61 (i.e. meshed with either one of the pulleys 51 and 61).

More particularly, a linear portion of the toothed belt 65 between point Q1 and point Q2 in Fig. 4 corresponds to the upper belt portion 65U, and a linear portion of the toothed belt 65 between point Q3 and point Q4 corresponds to the lower belt portion 65D. An arcuate (substantially semicircular) portion of the toothed belt 65 which passes through point Q2 and point Q3 is in contact with the drive pulley 51. An arcuate (substantially semicircular) portion of the toothed belt 65 which passes through point Q4 and point Q1 is in contact with the driven pulley 61. Point Q1 through point Q4 are depicted to specify positions of the upper belt portion 65U and lower belt portion 65D, which are not precise positions but approximate positions.

As clearly shown in Fig. 3, an interval between the swing arm 21 (43, 44) and upper belt portion 65U, and an interval between the swing arm 21 (43, 44) and lower belt portion 65D, are both very narrow. Especially, each of the above intervals becomes progressively narrower toward the drive pulley 51. This is due to the construction in which the pivot shaft (37, 39) of the swing arm 21 is coaxial with the output shaft 31 of the engine unit 15. Further, in this construction, the distance between the drive pulley 51 and driven pulley 61 is relatively short, compared, for example, with a construction in which the pivot shaft of the swing arm is located rearward of the output shaft.

When power generated in the engine unit 15 is outputted to the output shaft 31, the output shaft 31 will rotate the drive pulley 51. The rotative power of the drive pulley 51 is transmitted to the driven pulley 61 with a constant reduction ratio by the toothed belt 65. As noted hereinbefore, the diameter of the driven pulley 61 is larger than that of the drive pulley 51. The driven pulley 61 rotates with the rear wheel 23 to move the two-wheeled motor vehicle 1 forward.

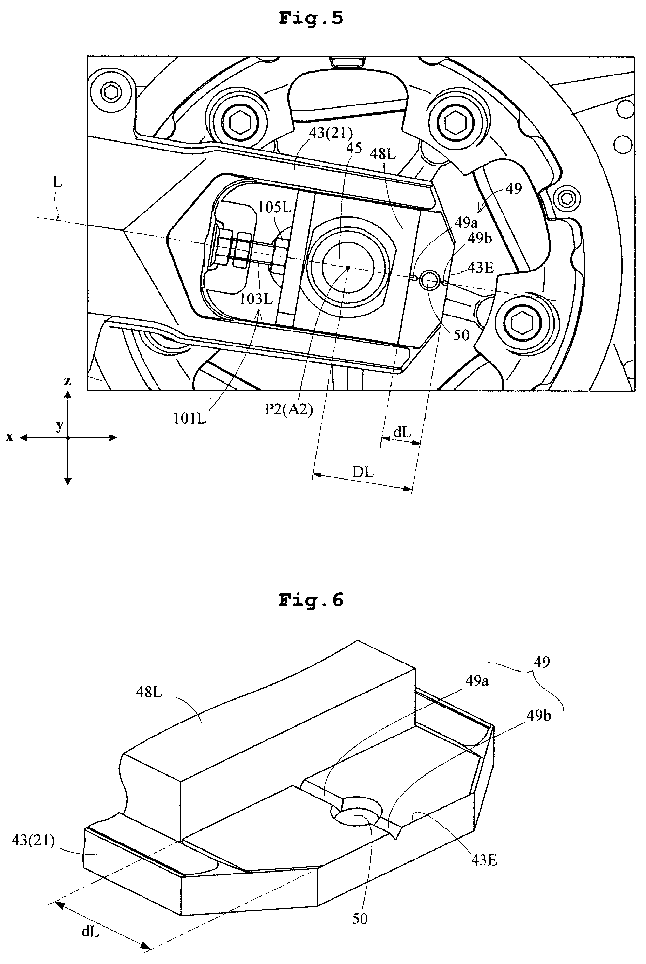

The swing arm 21 and axle 45 will be described again with reference to Figs. 2 and 5. Fig. 5 is an enlarged view of left sides of the rear end of the swing arm 21 and the axle 45.

A support 48L is disposed at a left end of the axle 45. The support 48L has a through-hole, and the axle 45 is inserted in this through-hole.

As shown in Fig. 5, the support 48L is held by the left swing arm 43 to be capable of parallel translation along the imaginary line L in side view. That is, the left end of the axle 45 is held through the support 48L by the left swing arm 43. When the support 48L makes sliding movement, the left end of the axle 45 will make parallel translation with the support 48L.

An adjusting mechanism 101L is disposed in the rear portion of the left swing arm 43 for adjusting a position of the left end of the axle 45. The adjusting mechanism 101L is located adjacent the front of the support 48L in side view. The adjusting mechanism 101L includes a bolt 103L, and a nut 105L attached to the bolt 103L.

The bolt 103L is disposed to have an axis thereof coinciding with the imaginary line L in side view. One end (front) of the bolt 103L is inserted in the left swing arm 43. The left swing arm 43 supports the bolt 103L to be axially movable forward and backward. The support 48L is connected to the other end (rear) of the bolt 103L.

When the nut 105L is turned, the bolt 103L will move forward and backward relative to the left swing arm 43. Such movement of the bolt 103L slides the left end of the axle 45 with the support 48L. The direction in which the left end of the axle 45 makes parallel translation coincides with the imaginary line L in side view.

As shown in Fig. 2, a construction similar to the support 48L and adjusting mechanism 101L is provided at a right end of the axle 45 and in a rear portion of the right swing arm 41 That is, a support 48R is disposed at the right end of the axle 45. An adjusting mechanism 101 R is disposed in the rear portion of the right swing arm 41. The adjusting mechanism 101R includes a bolt 103R and a nut 105R. When the nut 105R is turned, the right end of the axle 45 will make parallel translation relative to the right swing arm 41.

Reference is made to Figs. 5 and 6. Fig. 6 is a perspective view showing a groove 49. The left swing arm 43 has the groove 49 in the rear portion thereof. The groove 49 serves to position a measuring instrument for measuring a dimension dL from a rear edge 43a of the left swing arm 43 to the support 48L. The dimension dL takes a value corresponding to a distance DL from the rear edge 43a to the axle 45 (to the rear wheel axis A2, to be exact). That is, the dimension dL is a size with reference to the rear edge 43a and corresponding to the distance DL. The measuring instrument may be a slide caliper, measuring rod, linear scale or ruler, or other flat plate-like object or rod-like object.

The groove 49 is formed in a side surface outward in the transverse direction y of the left swing arm 43. The groove 49 extends linearly along the imaginary line L in side view. One end of the groove 49 reaches the rear edge 43E of the left swing arm 43. The rear edge 43E extends substantially perpendicular to the extending direction (imaginary line L) of the groove 49. The other end of the groove 49 reaches the support 48L in side view.

In this Embodiment 1, the left swing arm 43 has a hole 50 formed in the course of the groove 49. Therefore, the groove 49 is divided in side view into a groove portion 49a located forward of the hole 50 and a groove portion 49b located rearward of the hole 50. The groove 49 corresponds to the guide portion.

Since the hole 50 does not form part of the guide portion, the hole 50 may be omitted as appropriate. In this case, the groove portion 49a and groove portion 49b may be connected to each other to be changed into one continuous groove.

The right swing arm 41 also has a groove (not shown) similar to the groove 49. The groove of the right swing arm 41 also serves to position the measuring instrument.

With the positioned measuring instrument, a dimension dR (Fig. 2) from the rear edge 41E of the right swing arm 41 to the support 48R can be measured. The dimension dR takes a value corresponding to a distance DR (Fig. 2) from the rear edge 41E to the axle 45 (to the rear wheel axis A2, to be exact). That is, the dimension dR is a size with reference to the rear edge 41E and corresponding to the distance DR. This groove also corresponds to the guide portion.

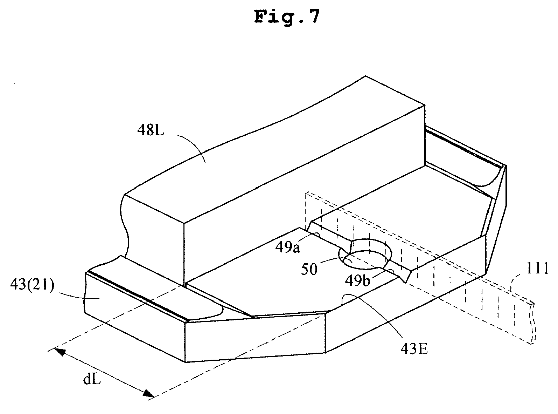

Reference is made to Fig. 7. Fig. 7 is a perspective view showing an example of use of the groove 49. As shown, a forward end of a measuring instrument 111 is brought into contact with the support 48L, while placing longitudinal side edges of the measuring instrument 111 in contact with the groove 49. Consequently, the measuring instrument 111 is always placed in the right position relative to the left swing arm 43 and support 48L. More particularly, the measuring instrument 111 can be aligned to a direction along the imaginary line L in side view. Therefore, the dimension dL can be measured accurately. The groove (not shown) of the right swing arm 41 is used similarly, to apply the measuring instrument 111 to the right position for measuring the dimension dR accurately.

Based on results of measurement of the dimension dL and dimension dR, for example, the nuts 105L and 105R are turned to equalize these dimensions dL and dR. Consequently, the distance DL and distance DR become equal and the rear wheel axis A2 becomes parallel to the transverse direction y.

When the dimension dL and dimension dR are varied, respectively, while keeping the equal relation therebetween, the distance of the rear wheel axis A2 to the pivot shaft (37, 39) of the swing arm 21 can be changed while keeping the rear wheel axis A2 parallel to the transverse direction y. In this way, tension (amount of deflection) of the toothed belt 65 can be adjusted.

### 2. Belt cover

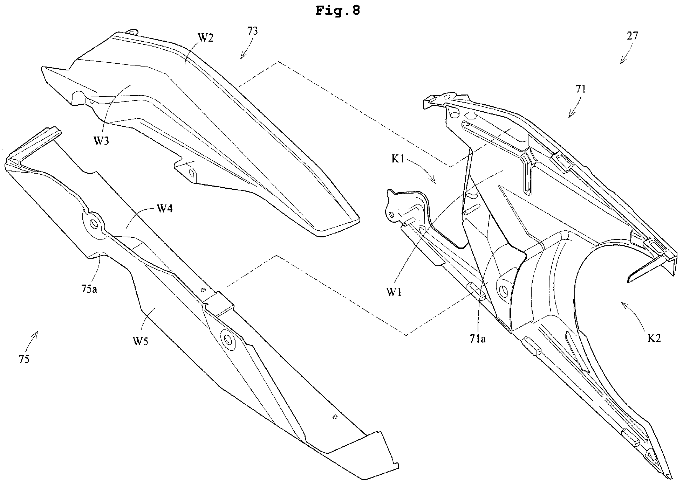

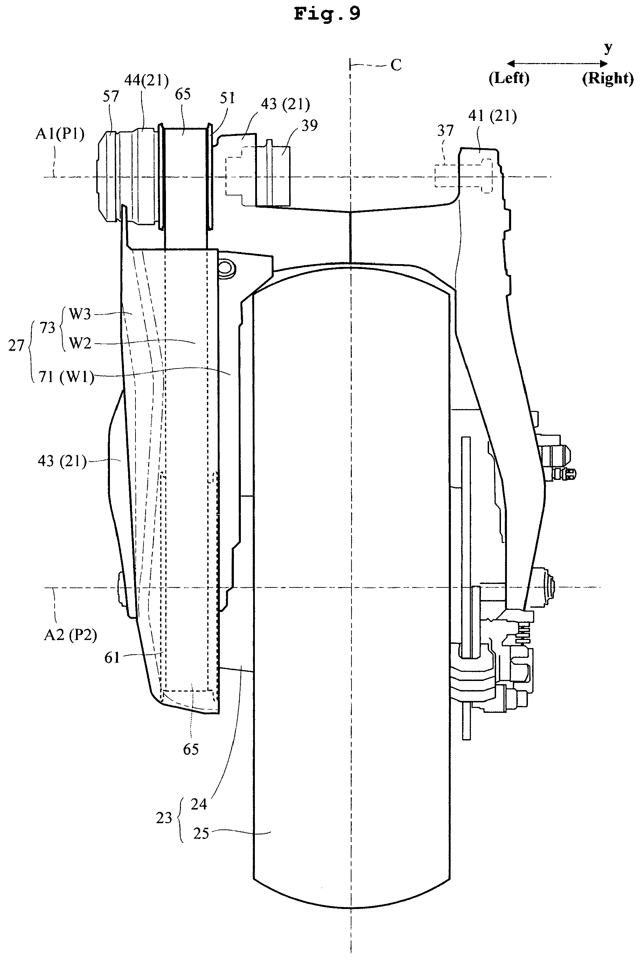

The belt cover 27 for protecting the toothed belt 65 will be described in detail with reference to Figs. 8 and 9. Fig. 8 is an exploded perspective view of the belt cover 27. Fig. 9 is a view showing principal portions of the belt cover 27 and other components seen from above.

As shown in Fig. 8, the belt cover 27 includes an inner cover 71, an upper cover 73 and a lower cover 75 separable from one another. The upper cover 73 and lower cover 75 are joined to the inner cover 71, respectively. The inner cover 71 has an inner wall portion W1 located to the right of the toothed belt 65.

As shown in Fig. 9, the inner wall portion W1 (inner cover 71) is located between the toothed belt 65 and the rear wheel 23 with respect to the transverse direction y. That is, the inner wall portion W1 (inner cover 71) is located at the same side as the side adjacent the rear wheel 23 (in this embodiment, the right side in the transverse direction y) of the toothed belt 65. The inner wall portion W1 faces the toothed belt 65. The inner wall portion W1 partitions off the toothed belt 65 and part of the left swing arm 43 from the rear wheel 23.

Fig. 9 clearly shows a positional relationship between the respective members mentioned above. That is, the pivot shaft (37, 39) of the swing arm 21 is coaxial with the output shaft 31. In the transverse direction y, the forward portion of the swing arm 21 (right swing arm 41 and left swing arm 43) is located to the right of the toothed belt 65, and the rearward portion of the swing arm 21 (left swing arm 43) is located to the left of the toothed belt 65. In the transverse direction y, naturally, the forward portion of the swing arm 21 (right swing arm 41 and left swing arm 43) is located to the right of the drive pulley 51, and the rearward portion of the swing arm 21 (left swing arm 43) is located to the left of the driven pulley 61. As is the forward portion of the swing arm 21, the rear wheel 23 is located to the right of the toothed belt 65.

As clearly shown in Fig. 3, the inner wall portion W1 is formed to overlap the upper belt portion 65U and lower belt portion 65D in side view, respectively, and to cover also an area between the upper belt portion 65U and lower belt portion 65D. In other words, the inner wall portion W1 ranges in the vertical direction z from a position above the upper belt portion 65U to a position below the lower belt portion 65D. That is, the inner wall portion W1 completely covers an area in the vertical direction z from the upper belt portion 65U to the lower belt portion 65D.

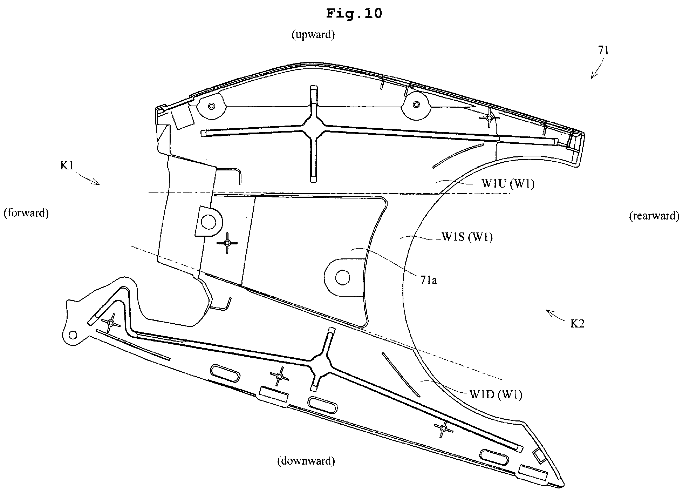

Fig. 10 is a front view of the inner cover 71 seen from the left side in the transverse direction y, which shows an inner surface opposed to the toothed belt 65. The drive pulley 51 is located leftward in Fig. 10, and the driven pulley 61 rightward. To facilitate understanding, Fig. 10 indicates approximately upward, downward, forward and rearward positions.

The inner cover 71 has a front cutout K1 formed in a forward portion thereof to correspond to the shape of the left swing arm 43. The gap between the front cutout K1 and the left swing arm 43, preferably, is made as small as possible. The inner cover 71 has a rear cutout K2 formed in a rearward portion thereof to correspond to the shape of the wheel 24. The gap between the rear cutout K2 and the wheel 24, preferably, is made as small as possible.

The inner wall portion W1 is made up of a middle tier W1S which overlaps the left swing arm 43 in side view, an upper wall portion W1U above the middle tier W1S, and a lower tier W1D below the middle tier W1S. The upper belt portion 65U and lower belt portion 65D overlap the upper tier W1U and lower tier W1D in side view, respectively (see Fig. 3).

The middle tier W1S has a ridge 71a formed on an inner wall surface thereof opposed to the left swing arm 43. The ridge 71a is raised leftward in the transverse direction y to correspond to the shape of the left swing arm 43. As clearly shown in Figs. 2 and 8, the ridge 71a has a projecting height increasing from front to rear of the middle tier W1S. Fig. 2 depicts a section of the middle tier W1S of the inner wall portion W1.

The upper cover 73 is a member extending substantially in the fore and aft direction x and having an L-shaped section, and is disposed to cover areas above and leftward of the upper belt portion 65U. The upper cover 73 has an upper wall portion W2 and an upper and outer wall portion W3. The upper wall portion W2 is located above the upper belt portion 65U. The upper wall portion W2 faces the toothed belt 65. The upper and outer wall portion W3 is located to the left of the upper belt portion 65U. The upper and outer wall portion W3 faces the toothed belt 65.

The lower cover 75 is a member extending substantially in the fore and aft direction x and having an L-shaped section, and is disposed to cover areas below and leftward of the lower belt portion 65D. The lower cover 75 has a bottom wall portion W4 and a lower and outer wall portion W5. The bottom wall portion W4 is located below the lower belt portion 65D. The bottom wall portion W4 faces the toothed belt 65. The lower and outer wall portion W5 is located to the left of the lower belt portion 65D. The lower and outer wall portion W5 faces the toothed belt 65.

The lower cover 75 has a recess 75a formed in part of an outer surface ranging from the lower and outer wall portion W5 to the bottom wall portion W4. As shown in Fig. 1, this recess 75a is formed in a position adjacent the main stand 19 so that the lower cover 75 will not contact the main stand 19.

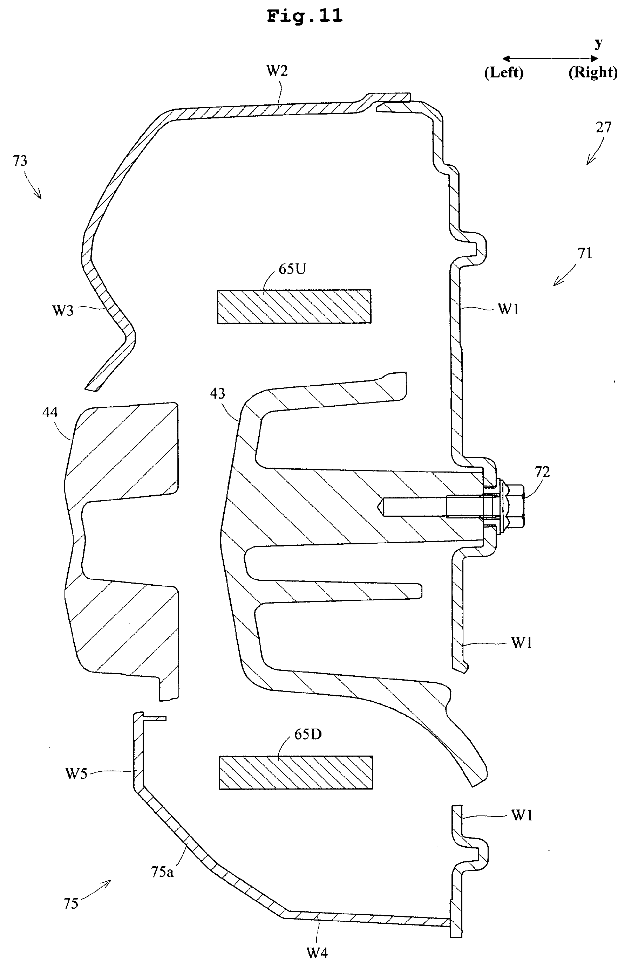

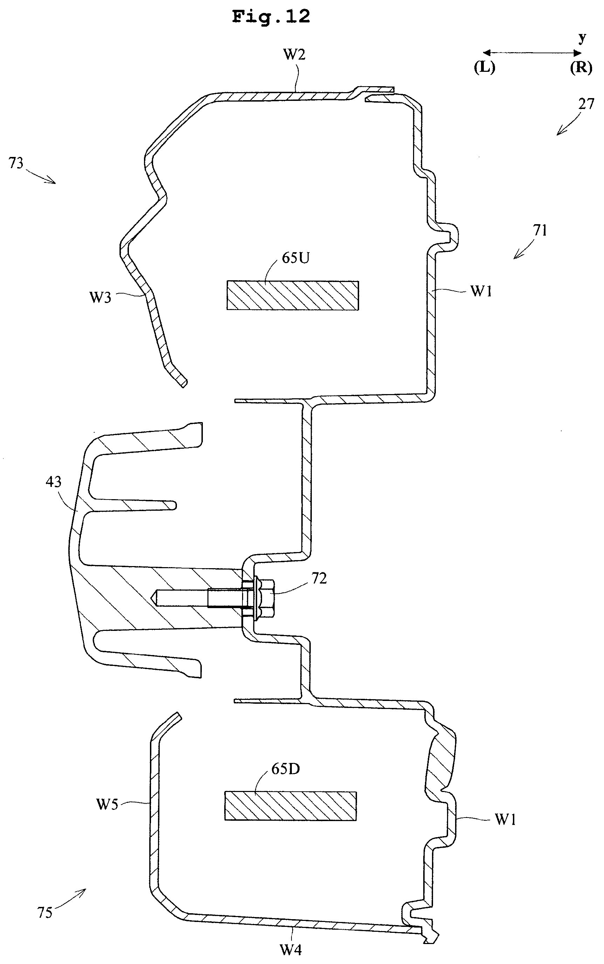

Reference is made to Figs. 11 and 12. Fig. 11 is a sectional view, taken on line b-b of Fig. 1, of the belt cover 27 and other components. Fig. 12 is a sectional view, taken on line c-c of Fig. 1, of the belt cover 27 and other components.

Since line b-b of Fig. 1 cuts the lower cover 75 in the position of the recess 75a, a section of the recess 75a appears in Fig. 11. Line b-b of Fig. 1, compared with line c-c, cuts a forward position of the left swing arm 43. In Fig. 11, therefore, the left swing arm 43 is located relatively rightward in the transverse direction y, and the output shaft cover 44 appears leftward of the left swing arm 43. On the other hand, in Fig. 12, the left swing arm 43 is located relatively leftward in the transverse direction y.

As shown in Figs. 11 and 12, the upper cover 73 is joined to the upper end of the inner cover 71. Consequently, the inner wall portion W1 and upper wall portion W2 are continuous without a gap therebetween (see also Fig. 9). Similarly, the lower cover 75 is joined to the bottom end of the inner cover 71. Consequently, the inner wall portion W1 and bottom wall portion W4 are continuous without a gap therebetween.

The joint between the inner cover 71 and upper cover 73 (hereinafter called the "joint" as appropriate) is disposed out of alignment in the vertical direction z with the upper belt portion 65U. In other words, as shown in Fig. 9, the covers 71 and 73 are designed so that positions of the joint and the upper belt portion 65U will not overlap in transverse direction y. The joint is disposed out of alignment in the vertical direction z with the lower belt portion 65D also. Such arrangement, even if rain water, mud and the like (hereinafter referred to as the "water and the like") enter the belt cover 27 through the joint, can conveniently inhibit the water and the like from dropping to the upper belt portion 65U and lower belt portion 65D.

Similarly, the joint between the inner cover 71 and lower cover 75 is disposed out of alignment in the vertical direction z with the lower belt portion 65D and upper belt portion 65U. Such arrangement, even if water and the like enter the belt cover 27 through the joint between the inner cover 71 and lower cover 75, can conveniently inhibit the water and the like from reaching the lower belt portion 65D and upper belt portion 65U.

Reference is made to Fig. 11. The upper and outer wall portion W3 extends from the upper wall portion W2 downward to a position adjacent the upper end of the output shaft cover 44. The belt cover 27, together with the output shaft cover 44, forms a substantially closed area surrounding the upper belt portion 65U in sectional view. Specifically, areas above and at opposite sides of the upper belt portion 65U are surrounded by the inner wall portion W1. upper wall portion W2 and upper and outer wall portion W3, respectively. An area below the upper belt portion 65U faces an upper end surface of the left swing arm 43.

The lower and outer wall portion W5 extends from the bottom wall portion W4 upward to a position adjacent the lower end of the output shaft cover 44. The belt cover 27, together with the output shaft cover 44, further forms a substantially closed area surrounding the lower belt portion 65D in sectional view. Specifically, areas below and at opposite sides of the lower belt portion 65D are surrounded by the inner wall portion W1, bottom wall portion W4 and lower and outer wall portion W5. An area above the lower belt portion 65D faces a lower end surface of the left swing arm 43.

As seen from Fig. 11, the output shaft cover 44 blocks stones and the like flying from a left side in the transverse direction y to the areas formed by the belt cover 27. That is, the output shaft cover 44 functions also as an outer wall on the left side in the transverse direction y of the belt cover 27.

Reference is made to Fig. 12. In Fig. 12, the upper and outer wall portion W3 extends from the upper wall portion W2 downward to a position adjacent the upper end of the left swing arm 43. The lower and outer wall portion W5 extends from the bottom wall portion W4 upward to a position adjacent the lower end of the left swing arm 43. Consequently, the belt cover 27, together with the left swing arm 43, forms closed areas in sectional view. The upper belt portion 65U and lower belt portion 65D are housed in the areas formed by the belt cover 27 and left swing arm 43.

As seen from Fig. 12, the left swing arm 43 blocks stones and the like flying from a left side in the transverse direction y to the areas formed by the belt cover 27. That is, the left swing arm 43 functions also as an outer wall on the left side in the transverse direction y of the belt cover 27.

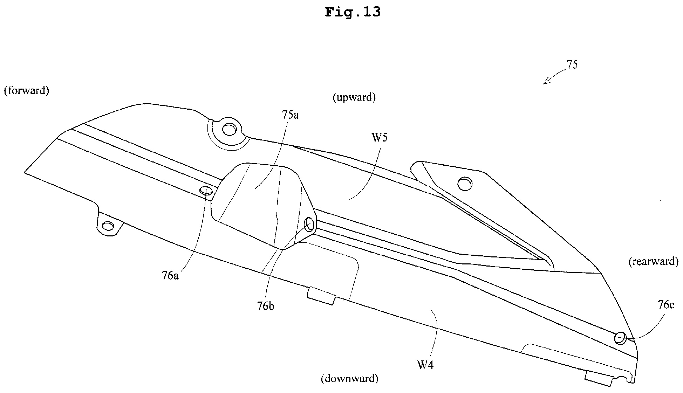

Reference is made to Fig. 13. Fig. 13 is a perspective view of the lower cover 75 seen from an obliquely downward position, and showing positions of discharge bores of the lower cover 75. To facilitate understanding, Fig. 13 indicates approximately upward, downward, forward and rearward positions.

As shown, the lower cover 75 has discharge bores 76a, 76b and 76c formed therein for discharging foreign objects such as stones and the like and water and the like (rain water, mud and so on).

The discharge bore 76a is formed in the bottom wall portion W4. Specifically, the discharge bore 76a is disposed at an outer end in the transverse direction y of the bottom wall portion W4, and in a position adjacent and forward in the fore and aft direction x of the recess 75a. Foreign objects, water and the like gather relatively easily in the position of this discharge bore 76a at times of acceleration of the two-wheeled motor vehicle 1.

The discharge bore 76b is formed in the recess 75a. Specifically, the discharge bore 76b is formed in a rearward location in the fore and aft direction x of the recess 75a. Foreign objects, water and the like gather relatively easily in the position of this discharge bore 76b at times of deceleration of the two-wheeled motor vehicle 1.

The discharge bore 76c is formed in a bend between the bottom wall portion W4 and the lower and outer wall portion W5. Specifically, the discharge bore 76c is formed in a bend portion at the rear end of the lower cover 75. As seen from Fig. 1, the rear end of the lower cover 75 is the lowest position in the vertical direction z of the lower cover 75, i.e. the lowest end of the lower cover 75. Naturally, foreign objects, water and the like gather easily in the position of this discharge bore 76c, and foreign objects, water and the like gather still more easily at times of acceleration of the two-wheeled motor vehicle 1.

With these discharge bores 76a to 76c, even if foreign objects such as stones and the like and water and the like enter the belt cover 27, these foreign objects and water and the like can be discharged out of the belt cover 27 through the discharge bores 76a to 76c.

The above inner cover 71 is fixed to the left swing arm 43 with bolts 72 as shown in Figs. 11 and 12. The upper cover 73 and lower cover 75 are fixed to the left swing arm 43 and output shaft cover 44 with bolts, respectively. The covers 71, 73 and 75 are formed of resin, for example.

According to the two-wheeled motor vehicle 1 in Embodiment 1 as described above, the belt cover 27 includes the inner wall portion W1, and the inner wall portion W1 is disposed between the toothed belt 65 and the rear wheel 23 in the transverse direction y, and ranges in the vertical direction z from the upper belt portion 65U to the lower belt portion 65D. The inner wall portion W1 can thus separate from the rear wheel 23 not only the upper belt portion 65U and lower belt portion 65D but the left swing arm 43 and output shaft cover 44. Therefore, the inner wall portion W1 can effectively block stones and the like flying from the rear wheel 23 toward the toothed belt 65, and can also effectively prevent the stones and the like colliding with the left swing arm 43 and/or output shaft cover 44 (hereinafter called the "left swing arm 43 and the like" as appropriate).

That is, the belt cover 27 in this Embodiment 1, rather than blocking stones and the like rebounding from the left swing arm 43 and the like, prevents the stones and the like from colliding with left swing arm 43 and the like, in the first place. This avoids beforehand a situation in which the stones and the like rebounding from the left swing arm 43 and the like get caught in the toothed belt 65.

Therefore, even if the position relative to the toothed belt 65 of the swing arm 21 varies greatly in the fore and aft direction x, and stones and the like scatter in various directions after colliding with the swing arm 21, the belt cover 27 can effectively protect the toothed belt 65.

In Japanese Utility Model Publication S60-21342, the position relative to the belt of the rear fender does not vary greatly in the fore and aft direction. Even if stones and the like collide with such rear fender and rebound therefrom, the directions in which the stones and the like fly toward the toothed belt are limited. Therefore, the dust guard of Utility Model Publication S60-21342 may be able to block the stones and the like flying from the limited directions toward the toothed belt. However, it is very difficult for the dust guard to block the stones and the like flying from various directions toward the toothed belt. In the first place, the dust guard is not a member for preventing stones and the like from colliding with the rear fender of Utility Model Publication S60-21342. It is therefore very difficult with the dust guard to inhibit stones and the like from colliding with the rear arm of Japanese Unexamined Patent Publication No. 2011-195138 and the swing arm 21 of this Embodiment 1. Therefore, even if the dust guard of Utility Model Publication S60-21342 is applicable to the two-wheeled motor vehicle of Unexamined Patent Publication No. 2011-195138, it will be difficult to protect the toothed belt.

Further, the belt cover 27, which has the upper wall portion W2 and bottom wall portion W4 in addition to the inner wall portion W1, can protect the toothed belt 65 with increased effect, and can further inhibit stones and the like from colliding with the left swing arm 43 and the like.

However narrow the space may be between the left swing arm 43 and the toothed belt 65, the above belt cover 27 can be installed easily regardless of the narrow space. Therefore, the belt cover 27 can be mounted conveniently on the two-wheeled motor vehicle 1 having the pivot shaft (37, 39) of the swing arm 21 coaxial with the output shaft 31 of the engine unit 15.

For example, the dust guard described in Utility Model Publication S60-21342 noted in the Related Art section hereof has a vertical side and a horizontal side, and the latter is disposed between the rear arm and the lower belt portion. Such dust guard needs a sufficient installation space between the rear arm and the lower belt portion.

Since the two-wheeled motor vehicle of Utility Model Publication S60-21342 actually employs a structure having the pivot shaft of the rear arm located rearward of the drive pulley, the distance between the drive pulley and the driven pulley is relatively long, and a sufficiently large space exists between the rear arm and the lower belt portion. On the other hand, this Embodiment 1 employs a structure having the pivot shaft (37, 39) of the swing arm 21 coaxial with the output shaft 31 of the engine unit 15, and thus the distance between the pulleys 51 and 61 is short, and the gap between the left swing arm 43 and the lower belt portion 65D is very narrow. Therefore, an attempt simply to apply the dust guard of Utility Model Publication S60-21342 to the two-wheeled motor vehicle 1 of this Embodiment 1 will face a difficulty even in installing the dust guard. It is clear from the above that the dust guard of Utility Model Publication S60-21342 is not premised on installation on the two-wheeled motor vehicle 1 of this Embodiment 1.

The upper wall portion W2 and the bottom wall portion W4 are each continuous with the inner wall portion W1 without a gap. This is effective to prevent stones and the like from entering the belt cover 27.

The upper and outer wall portion W3 can effectively block stones and the like flying from the left side in the transverse direction y to the upper belt portion 65U. Further, since the upper and outer wall portion W3 is formed to extend from the upper wall portion W2 to a position adjacent the upper ends of the left swing arm 43 and other components, the areas above and at opposite sides of the upper belt portion 65U can be surrounded by the respective wall portions W1, W2 and W3. Therefore, the upper belt portion 65U can be protected effectively.

Similarly, the lower and outer wall portion W5 can effectively block stones and the like flying from the left side in the transverse direction y to the lower belt portion 65D. Further, since the lower and outer wall portion W5 is formed to extend from the bottom wall portion W4 to a position adjacent the lower ends of the left swing arm 43 and other components, the areas below and at opposite sides of the lower belt portion 65D can be surrounded by the respective wall portions W1, W4 and W5. Therefore, the lower belt portion 65D can be protected effectively.

These upper and outer wall portion W3 and lower and outer wall portion W5 are also continuous with the upper wall portion W2 and bottom wall portion W4, respectively. Therefore, the respective wall portions W1 to W5 can surround, in a way to wrap, the left swing arm 43 and other components, while exposing only the left side surfaces of the left swing arm 43 and other components. As a result, as seen from Figs. 11 and 12, areas around the upper belt portion 65U and lower belt portion 65D can be substantially closed. Therefore, the upper belt portion 65U and lower belt portion 65D can be protected appropriately from stones and the like flying from all directions.

The regions of the left swing arm 43 and other components subjected to stones and the like are mainly the left side surfaces of the left swing arm 43 and other components. Therefore, the stones and the like colliding with and rebounding from the left swing arm 43 and other components can be prevented effectively from entering the belt cover 27.

Further, since the lower cover 75 has discharge bores 76a, 76b and 76c, stones and the like having entered the belt cover 27 can be discharged appropriately outside the belt cover 27.

As described above, the two-wheeled motor vehicle 1 in Embodiment 1 includes the belt cover 27 which can conveniently protect the toothed belt 65. Thus, the vehicle 1 is capable of running in various conditions, including dirt roads and off-road runs.

The belt cover 27 is separable into the upper cover 73 having the upper wall portion W2 and the upper and outer wall portion W3 which are easily visible due to the outward appearance of the two-wheeled motor vehicle 1, and the inner cover 71 having the inner wall portion W1 which is not easily visible. Therefore, the shape of the upper cover 73 can be selected and designed separately from the inner cover 71, and the upper wall portion W2 and the upper and outer wall portion W3 can be designed conveniently. Similarly, the belt cover 27 is separable into the lower cover 75 having the bottom wall portion W4 and the lower and outer wall portion W5 which are easily visible due to the outward appearance of the two-wheeled motor vehicle 1, and the inner cover 71 having the inner wall portion W1 which is not easily visible. Therefore, the shape of the lower cover 75 can be selected and designed separately from the inner cover 71, and the bottom wall portion W4 and the lower and outer wall portion W5 can be designed conveniently.

The swing arm 21 is supported by the rear of the relatively rigid engine unit 15 (specifically, by the engine cases 33 and 35). In this way, the swing arm 21 can be supported conveniently. This can prevent the load of the swing arm 21 from acting on the output shaft 31. This can also prevent uneven wearing of the pivot shaft (37, 39).

The elastic cap 56 is provided for the opening of the output shaft cover 44. The elastic cap 56 is first attached to the opening of the output shaft cover 44, and thereafter the output shaft cap 57 is attached. With this construction, when the output shaft cap 57 is placed in a predetermined position on the output shaft cover 44, the elastic cap 5t is deformed in response to a pressure in the closed space formed between the output shaft cap 57 and the elastic cap 56, thereby to be able to absorb variations of the pressure in the closed space. This can conveniently prevent shifting of the output shaft cap 57 relative to the output shaft cover 44, such as loosening of the output shaft cap 57, before the output shaft cap 57 is fixed to the output shaft cover 44 with bolts or otherwise. Therefore, working efficiency in attaching the output shaft cap 57 can be improved.

If the elastic cap 56 is omitted, when the output shaft cap 57 is placed in the predetermined position on the output shaft cover 44, a closed space is formed by the output shaft 31, bearing 53, output shaft cover 44 and output shaft cap 57. However, the pressure in the closed space is absorbed by none of these members. Position shifting of the output shaft cap 57, such as loosening of the output shaft cap 57, can occur easily before the output shaft cap 57 is fixed to the output shaft cover 44.

The left swing arm 43 has the groove 49, and the right swing arm 41 also has a groove (not shown), which allow the measuring instrument 111 to be positioned accurately. Therefore, positions of the opposite ends of the axle 45 can be measured accurately. Based on results of the measurement, the axle 45 can be adjusted accurately to be parallel to the transverse direction y. Based on results of the measurement, the axle 45 can also be moved toward and away from the pivot shaft (37, 39).

Particularly since the toothed belt 65 has a larger width B (see Fig. 2) than a chain, a displacement in the transverse direction y of the axle 45 (rear wheel axis A2) has a relatively large influence. For example, it tends to result in abrasion of the toothed belt 65. In this Embodiment 1, the groove 49 serves to enable the axle 45 to be aligned to the transverse direction y with high accuracy, thereby to prevent damage to the toothed belt 65 effectively.

The grooves 49 are used for measuring dimensions dL and dR with reference to the rear edges 43E and 41E. Therefore, errors are inhibited to obtain accurate results of measurement. In a construction for measuring dimensions with reference to a scale or an indicator formed on the swing arm 21, for example, there is a possibility of shifting the scale itself or the indicator itself. This is due to an error occurring at the time of manufacturing the swing arm 21 (e.g. a displacement occurring at the time of formation of the scale or the like), or an error occurring at the time of manufacturing various components associated with the swing arm 21. On the other hand, there is very little possibility of an error occurring with dimensions of the outward configuration of the swing arm 21. Since the dimensions dL and dR are based on the rear edges 43E and 41E which are parts of the outward configuration of the swing arm 21, they cannot easily be influenced by manufacturing errors of the swing arm 21 and other associated parts. Therefore, the dimensions dL and dR can be measured with increased accuracy.

The grooves 49 extend along the imaginary line L in side view. Therefore, as seen from Fig. 5, an increase in the dimension dL will result in a decrease by a corresponding amount in a distance EL between the pivot shaft (37, 39) and the axle 45 (rear wheel axis A2), and a decrease in the dimension dL will result in an increase by a corresponding amount in the distance EL. The same can be said of the dimension dR. That is, based on the results of measurement of the dimensions dL and dR, the distance EL can also be determined uniquely. Therefore, the distance EL can be adjusted easily. Since one end of each groove 49 reaches the rear edge 43E and 41 E, the dimension can be measured conveniently with reference to the rear edge 43E and 41E.

Since the output shaft 31 and the pivot shaft (37, 39) of the swing arm 21 are coaxial, swinging of the swing arm 21 synchronizes with swinging of the toothed belt 65, which can conveniently prevent the toothed belt 65 from disengaging from the drive pulley 51 and driven pulley 61. Since the output shaft 31 and pivot shaft (37, 39) are coaxial, the tension of the toothed belt 65 is maintained substantially constant even if the swing arm 21 swings, thereby inhibiting the toothed belt 65 from disengaging from the pulleys 51 and 61 with increased effect. Therefore, it is not necessary to provide separately a mechanism (e.g. rollers) for preventing tooth jumping of the toothed belt 65, nor is it necessary to enlarge the diameter of the drive pulley 51 to excess. This can conveniently prevent enlargement of the body size of the two-wheeled motor vehicle 1.

Since power is transmitted from the output shaft 31 to the rear wheel 23 through the toothed belt 65, weight saving is attained compared with the case of transmitting power by a chain. Specifically, a die-cast case for storing oil can be omitted by employing the toothed belt 65, thereby rendering the body portion around the rear wheel 23 lightweight.

### SECOND EMBODIMENT

Inventor herein has made new findings that a muffled sound is generated when, as described in Embodiment 1, the belt cover 27 of the substantially closed type surrounding the upper belt portion 65U and lower belt portion 65D is employed. This sound is somewhat jarring to the rider, and can hamper comfortable traveling. Then, Inventor herein has made intensive research and ascertained that the muffled sound consists of a sound from the toothed belt 65 and a sound from the left swing arm 43.

The sound of the toothed belt 65 generates from the toothed belt 65 itself as a result of amplification of string vibration thereof. The frequency of this sound is variable with the characteristic values (weight and tension) of the toothed belt 65, the belt span of the toothed belt 65, and the number of rotations of the drive pulley 51. There is no way to prevent generation of this sound itself which is due to the string oscillation of the toothed belt 65. It is thought that the sound produced from the toothed belt 65 itself reaches the rider's ears as a muffled sound because the upper belt portion 65U and lower belt portion 65D are substantially enclosed in the belt cover 27.

The sound of the left swing arm 43 generates from the left swing arm 43 itself by swinging of the left swing arm 43. That is, the string vibration of the toothed belt 65 forcibly swings and vibrates the drive pulley 51 and driven pulley 61 substantially in the fore and aft direction x. The vibration of the driven pulley 61 is transmitted to the axle 45 through the wheel 24, and is further transmitted from the axle 45 to the swing arm 21. When the vibration is transmitted to the swing arm 21, a sound will generate from the swing arm 21 itself. Here, when the left swing arm 43 generates sound from the belt cover 27, the sound is thought to become a muffled sound.

Inventor herein has attained a construction which can make less audible for the rider and third parties, the "muffled sound" generating where such belt cover 27 is employed. This construction will be described as Embodiment 2.

Embodiment 2 will be described hereinafter with reference to the drawings. A two-wheeled motor vehicle 1 in Embodiment 2 has substantially the same construction as in Embodiment 1 excepting that the construction in the belt cover and the construction of the axle are different from those in Embodiment 1. So, the two-wheeled motor vehicle 1 in Embodiment 2 will be described centering on the belt cover and the axle. Like reference signs will be used to identify like parts in Embodiment 1 and will not particularly be described.

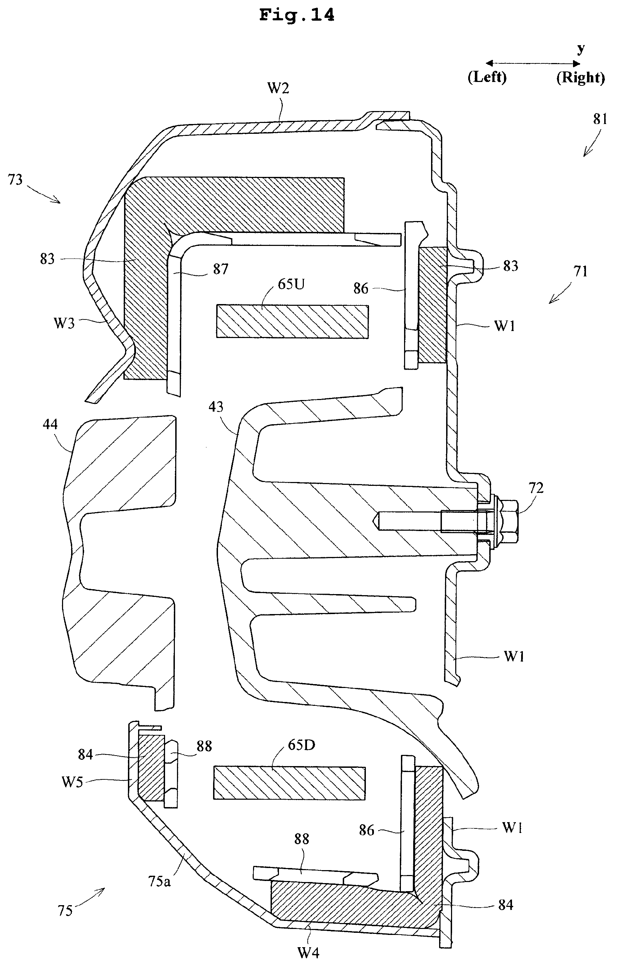

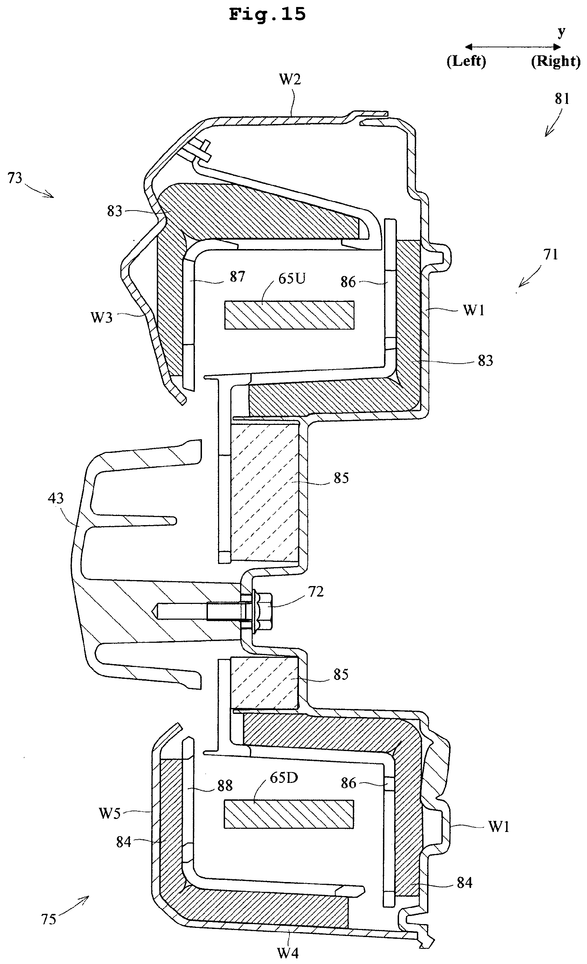

Fig. 14 is a sectional view, taken on line b-b of Fig. 1, of a belt cover 81 in Embodiment 2. Fig. 15 is a sectional view, taken on line c-c of Fig. 1, of the belt cover 81 in Embodiment 2.

As shown, the belt cover 81 has the inner cover 71, upper cover 73 and lower cover 75 as described hereinbefore. Further, the belt cover 81 has sound absorbers 83, 84 and 85 arranged in its interior. The sound absorber 83 is disposed to surround the upper belt portion 65U. The sound absorber 84 is disposed to surround the lower belt portion 65D. The sound absorber 85 is disposed in a position opposed to the left swing arm 43 as shown in Fig. 15. Each of the sound absorbers 83 to 85 is in a sheet form which is attached in an appropriately bent state to an inner wall of the belt cover 81. The sound absorber 83 corresponds to the upper sound absorber. The sound absorber 84 corresponds to the lower sound absorber. The sound absorber 85 corresponds to the swing arm sound absorber.

The sound absorbers 83 to 85, preferably, are formed of a foam material or sponge having a porous structure. For example, ethylene propylene diene rubber (EPDM) sponge, urethane sponge and the like may be cited. Alternatively, the sound absorbers 83 to 85 may be felt or nonwoven fabric. The sound absorbers 83 to 85 may include a plurality of these materials. The sound absorbers 83 to 85 may also include a material having sound insulating performance. Or the sound absorbers 83 to 85 may be formed to have sound insulating performance in addition to sound absorbing performance.

The belt cover 81 further includes holding members 86, 87 and 88 for holding the sound absorbers 83 to 85. The holding member 86 holds the sound absorbers 83 to 85 as sandwiched between the holding member 86 and inner walls of the inner cover 71. The holding member 87 holds the sound absorber 83 as sandwiched between the holding member 87 and inner walls of the upper cover 73. The holding member 88 holds the sound absorber 84 as sandwiched between the holding member 88 and inner walls of the lower cover 75.

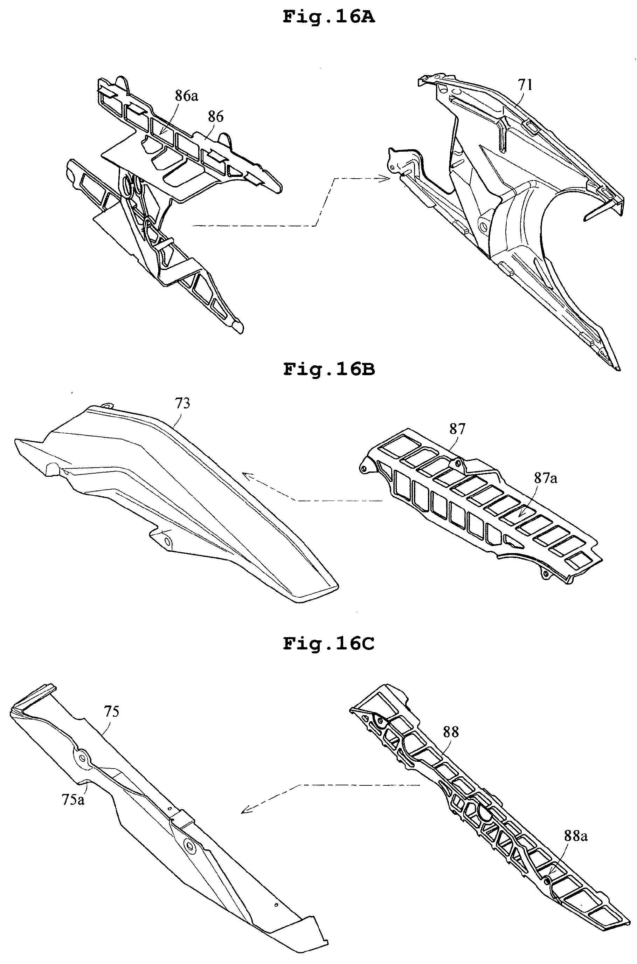

Reference is made to Fig. 16. Fig. 16A is an exploded perspective view of the inner cover 17 and the holding member 86. Fig. 16B is an exploded perspective view of the upper cover 73 and the holding member 87. Fig. 16C is an exploded perspective view of the lower cover 75 and the holding member 88.

As shown, the holding members 86 to 88 have a plurality of relatively large openings 86a, 87a and 88a, respectively, not to obstruct the sound absorbing function of the sound absorbers 83 to 85. The holding members 86 to 88 have shapes elongated in the extending directions of the upper belt portion 65U and lower belt portion 65D. Consequently, the sound absorbers 83 and 84 can be installed in the belt cover 81 as opposed to large parts of the upper belt portion 65U and lower belt portion 65D. The holding members 86 to 88 are shaped to follow the corresponding inner walls of the inner cover 71, upper cover 73 and lower cover 75. Consequently, the sound absorbers 83 to 85 can be conveniently installed on the inner walls of the respective covers 71, 73 and 75.

The sound absorbers 83 and 84 absorb and/or insulate sounds generating from the upper belt portion 65U and lower belt portion 65D, respectively, thereby to inhibit the muffled sound from leaking outside the belt cover 81. The sound absorber 85 absorbs and/or insulates sound generating from the left swing arm 43, thereby to inhibit the muffled sound from leaking outside the belt cover 81.

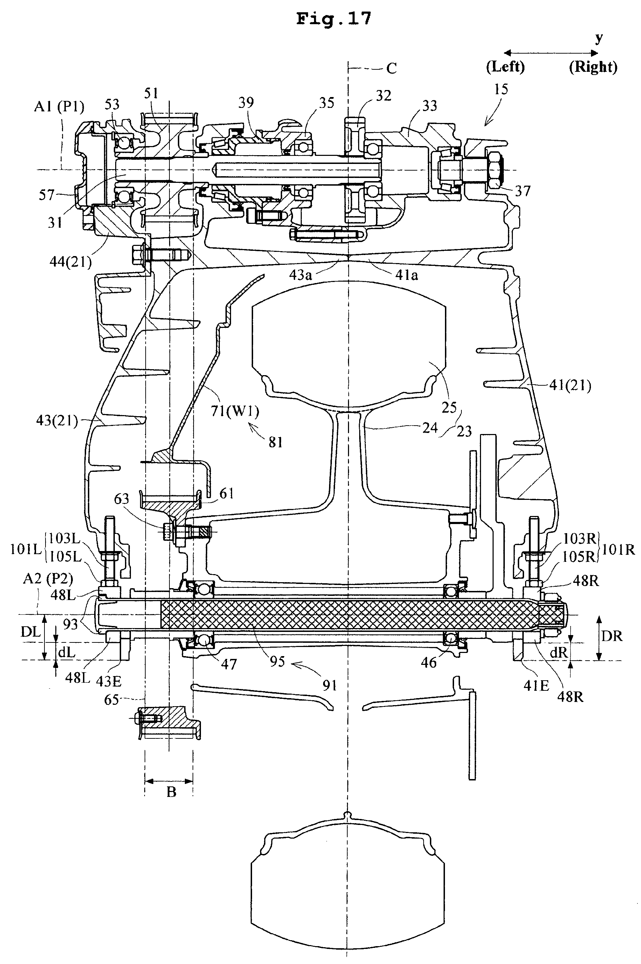

Reference is made to Fig. 17. Fig. 17 is a sectional view, taken on line a-a of Fig. 1, of the two-wheeled motor vehicle 1 according to Embodiment 2.

As shown, an axle 91 includes a tube member 93 having a hollow interior, and a vibration absorber 95 filled into the interior of the tube member 93. The tube member 93 is formed of metal and is highly rigid. The vibration absorber 95 is formed of a foamed resin material. The foamed material may be urethane foam or polystyrene foam, for example. The tube member 93 corresponds to the tubular member.

The axle 91 constructed in this way damps and/or absorbs conveniently vibration transmitted from the driven pulley 61. As a result, vibration transmitted from the axle 91 to the swing arm 21 is reduced, thereby to reduce the sound generating from the left swing arm 43 itself.

According to Embodiment 2 as described above, since the belt cover 81 has the sound absorbers 83 and 84, the sounds generating from the upper belt portion 65U and lower belt portion 65D can be inhibited effectively. Since the belt cover 81 has the sound absorber 85, the sound generating from the left swing arm 43 can be inhibited conveniently. Therefore, the muffled sound is made less audible to the rider and/or third parties.

Since the belt cover 81 has the holding members 86 to 88, the sound absorbers 83 to 85 can be conveniently installed in the belt cover 81.

Since the axle 91 has its interior is filled up with the vibration absorber 95, the sound generating from the left swing arm 43 itself within the belt cover 81 is reduced. This can effectively inhibit the muffled sound generating from the belt cover 81.

Embodiment 2 described above produces effects similar to those of Embodiment 1. That is, the inner wall portion W1 can separate from the rear wheel 23 not only the upper belt portion 65U and lower belt portion 65D but the left swing arm 43 and output shaft cover 44. Therefore, the inner wall portion W1 can effectively block stones and the like flying from the rear wheel 23 toward the toothed belt 65, and can also effectively prevent the stones and the like colliding with the left swing arm 43 and/or output shaft cover 44 (hereinafter called the "left swing arm 43 and the like" as appropriate). Further, the belt cover 27, which has the upper wall portion W2 and bottom wall portion W4 in addition to the inner wall portion W1, can protect the toothed belt 65 with increased effect, and can further inhibit stones and the like from colliding with the left swing arm 43 and the like.

The two-wheeled motor vehicle according to the present embodiments comprises a swing arm swingable about a pivot shaft coaxial with an output shaft of an engine unit; a drive wheel rotatably supported by a rear portion of the swing arm; a drive pulley mounted on the output shaft; a driven pulley rotatable with the drive wheel; a toothed belt wound around the drive pulley and the driven pulley; and a belt cover for protecting the toothed belt; wherein the drive wheel and a forward portion of the swing arm are located, in plan view, at one side of the toothed belt, and a rearward portion of the swing arm is located, in plan view, at the other side opposite the one side of the toothed belt, whereby the swing arm crosses the toothed belt in plan view; and wherein the belt cover includes an inner wall portion located at the one side of the toothed belt and vertically ranging from above an upper belt portion of the toothed belt passing, in side view, above an imaginary line extending through a center of rotation of the drive pulley and a center of rotation of the driven pulley, to below a lower belt portion of the toothed belt passing, in side view, below the imaginary line, thereby separating the toothed belt and the drive wheel; an upper wall portion located above the upper belt portion; and a bottom wall portion located below the lower belt portion.

In the two-wheeled motor vehicle of the present embodiments, the pivot shaft of the swing arm is coaxial with the output shaft of the engine unit. Therefore, the swing arm is located close to the upper belt portion and the lower belt portion, respectively. The swing arm crosses the toothed belt in plan view. Thus, the positional relationship in the transverse direction of the vehicle body between the swing arm and the toothed belt varies greatly with positions in the fore and aft direction.

With an up-and-down motion of the drive wheel, the swing arm swings about the pivot shaft. The output shaft rotates the drive pulley. The rotative power of the drive pulley is transmitted to the driven pulley through the toothed belt. The driven pulley is driven to rotate with the drive wheel.

The inner wall portion of the belt cover separates the toothed belt and the drive wheel over an area vertically ranging from above the upper belt portion to below the lower belt portion. Consequently, the inner wall portion can effectively block stones and the like flying from the drive wheel to both the toothed belt and the swing arm. The belt cover further including the upper wall portion and bottom wall portion in addition to the above-mentioned inner wall portion can protect the toothed belt conveniently, and can further prevent collision itself of stones and the like with the swing arm, as with the upper belt portion and lower belt portion, thereby to eliminate the possibility of the stones and the like colliding with and rebounding from the swing arm.

Therefore, even though the swing arm is vertically close to the lower belt portion, and even though the positional relationship in the transverse direction of the vehicle body between the swing arm and the toothed belt varies greatly with positions in the fore and aft direction, the above belt cover can protect the toothed belt appropriately.

In the present embodiments, it is preferred that the forward portion of the swing arm is swingably supported in a position at one side of the toothed belt in plan view. Further, in the present embodiments, it is preferred that the forward portion of the swing arm is supported by the engine unit.

In the present embodiments, it is preferred that the swing arm includes a belt-side swing arm body located at the same side as the toothed belt of the drive wheel, and the belt-side swing arm body crosses the toothed belt in plan view such that the drive wheel and a forward portion of the belt-side swing arm body are located at one side of the toothed belt in plan view and a rearward portion of the swing arm body is located at the other side opposite the one side of the toothed belt in plan view.

In the present embodiments, it is preferred that the belt cover includes an upper and outer wall portion located at the other side opposite the one side of the upper belt portion. It is also preferred that the belt cover includes an upper and outer wall portion located at the side of the upper belt portion opposite the inner wall side thereof. Such construction can effectively block stones and the like flying from the other side to the upper belt portion.

In the present embodiments, it is preferred that the upper and outer wall portion is formed from the upper wall portion to a position adjacent an upper end of the swing arm; the inner wall portion, the upper wall portion and the upper and outer wall portion surrounding the upper belt portion. It is preferred that the swing arm includes a belt-side swing arm portion located at the same side of the drive wheel as the toothed belt, and the upper and outer wall portion is formed from the upper wall portion to a position adjacent an upper end of the belt-side swing arm portion; the inner wall portion, the upper wall portion and the upper and outer wall portion surrounding the upper belt portion. With such construction, the upper wall portion, inner wall portion and upper and outer wall portion can surround areas above and at opposite sides of the upper belt portion. Therefore, the upper belt portion can be protected effectively.

In the present embodiments, it is preferred that the belt cover includes a lower and outer wall portion located at the other side opposite the one side of the lower belt portion. It is also preferred that the belt cover includes a lower and outer wall portion located at the side of the lower belt portion opposite the inner wall portion side thereof. Such construction can effectively block stones and the like flying from the other side to the lower belt portion.

In the present embodiments, it is preferred that the lower and outer wall portion is formed from the bottom wall portion to a position adjacent a lower end of the swing arm; the inner wall portion, the bottom wall portion and the lower and outer wall portion surrounding the lower belt portion. It is preferred that the swing arm includes a belt-side swing arm portion located at the same side of the drive wheel as the toothed belt, and the lower and outer wall portion is formed from the bottom wall portion to a position adjacent a lower end of the belt-side swing arm portion; the inner wall portion, the bottom wall portion and the lower and outer wall portion surrounding the lower belt portion. With such construction, the bottom wall portion, inner wall portion and lower and outer wall portion can surround areas below and at opposite sides of the lower belt portion. Therefore, the lower belt portion can be protected effectively.

In the present embodiments, it is preferred that the bottom wall portion has discharge bores. This construction can conveniently discharge out of the belt cover foreign objects such as stones and the like and rain water having entered the belt cover.

In this embodiments, it is preferred that the belt cover has an upper sound absorber disposed in a position opposed to the upper belt portion. This construction can effectively absorb sound generated by the upper belt portion.

In the present embodiments, it is preferred that the belt cover has a lower sound absorber disposed in a position opposed to the lower belt portion. This construction can effectively absorb sound generated by the lower belt portion.

In the present embodiments, it is preferred that the belt cover has a swing arm sound absorber disposed in a position opposed to the swing arm. This construction can effectively absorb sound generated by the swing arm.

In the present embodiments, it is preferred that the belt cover includes an inner cover, an upper cover and a lower cover separable from one another, the inner wall portion being formed on the inner cover, the upper wall portion being formed on the upper cover, and the bottom wall portion being formed on the lower cover. With this construction, the upper cover and lower cover which easily show themselves in the outward appearance of the two-wheeled motor vehicle can be manufactured separately from the inner cover which does not easily show itself in the outward appearance.

In the present embodiments, it is preferred that the two-wheeled motor vehicle comprises an axle held by the rearward portion of the swing arm for rotatably supporting the drive wheel; wherein the axle includes a tubular member having a hollow interior, and a vibration absorber disposed in the interior of the tubular member. With this construction, even when vibration is transmitted from the driven pulley or other components, the axle itself can effectively absorb the vibration. Therefore, the vibration to be transmitted from the axle further to the swing arm can be reduced.

In the present embodiments, it is preferred that the two-wheeled motor vehicle comprises an axle held by the rearward portion of the swing arm for rotatably supporting the drive wheel; wherein the swing arm has a guide portion for positioning a measuring instrument for measuring a distance from a rear edge of the swing arm to the axle or measuring a dimension with reference to the rear edge and corresponding to the distance. Since the measuring instrument can be accurately positioned by means of the guide portion, the position of the axle can be measured accurately. The distance from the rear edge of the swing arm or the dimension with reference to the rear edge of the swing arm is not easily influenced by errors occurring at the time of manufacture of the swing arm and/or manufacturing errors of various associated parts. Therefore, the above distance or dimension can be obtained with increased accuracy, to measure or adjust the position of the axle highly accurately.

In the present embodiments, it is preferred that the guide portion is a groove extending along the imaginary line in side view, with one end of the groove reaching the rear edge of the swing arm. Since the guide portion is a groove extending along the imaginary line in side view, the distance between the pivot shaft and the axle can be determined from a result of measurement. Since one end of the groove reaches the rear edge of the swing arm, the distance from the rear edge or the dimension with reference to the rear edge can be measured conveniently.

It is preferred that the two-wheeled motor vehicle comprises a drive wheel rotatably supported by a swing arm; a drive pulley mounted on the output shaft; a driven pulley rotatable with the drive wheel; a toothed belt wound around the drive pulley and the driven pulley; a belt cover surrounding at least part of the toothed belt; and a sound absorber disposed in the belt cover. This construction can effectively inhibit sound generating from the belt cover.

It is preferred that the two-wheeled motor vehicle comprises an axle supported by a swing arm; a drive wheel rotatably supported by the axle, a drive pulley mounted on an output shaft of an engine unit; a driven pulley rotatable with the drive wheel; and a toothed belt wound around the drive pulley and the driven pulley; wherein the axle includes a tubular member having a hollow interior, and a vibration absorber disposed in the interior of the tubular member. With this construction, even when vibration is transmitted from the driven pulley or other components, the axle itself can effectively absorb the vibration. Therefore, the vibration to be transmitted from the axle further to the swing arm can be reduced.

The present invention is not limited to the foregoing embodiments, but may be modified as follows:
(1) In each of Embodiments 1 and 2 described above, the belt cover 27 or 81 is separable into the inner cover 71, upper cover 73, and lower cover 75, but this is not limitative. That is, the positions in which and the number of members into which the belt cover 27 or 81 is separable can be changed as appropriate.
   For example, the belt cover 27 may consist of two members such as an upper cover and a lower cover. In this case, for example, the upper cover may have formed thereon part of the inner wall portion W1, the upper wall portion W2 and the upper and outer wall portion W3. The lower cover may have formed thereon the remainder of the inner wall portion W1, the bottom wall portion W4 and the lower and outer wall portion W5. In this way, which cover should have each of the wall portions W1 to W5 formed thereon can be selected or varied as appropriate. Further, each of the upper cover and the lower cover may have a U-shaped section, for example. Thus, the shape of each member can also be selected or varied as appropriate.
(2) In each of Embodiments 1 and 2 described above, the inner cover 71 and upper cover 73 are joined, but this is not limitative. That is, a change may be made not to join the inner cover 71 and upper cover 73. In each of Embodiments 1 and 2 described above, the inner wall portion W1 and upper wall portion W2 are continuous, but this is not limitative. That is, the inner wall portion W1 and upper wall portion W2 may be discontinuous, and a gap may exist between the inner wall portion W1 and upper wall portion W2. A similar change may be made to the relationship between the inner cover 71 and lower cover 75, and to the relationship between the inner wall portion W1 and bottom wall portion W4.
(3) In Embodiment 2 described above, the sound absorber 83 is disposed to surround the upper belt portion 65U, but this is not limitative. For example, a change may be made to provide a sound absorber only for one side area facing the upper belt portion 65U. A change may be made to provide a sound absorber only for part of the area surrounding the upper belt portion 65U. Similarly, in Embodiment 2 described above, the sound absorber 84 is disposed to surround the lower belt portion 65D, but this is not limitative. For example, a change may be made to provide a sound absorber only for one side area facing the lower belt portion 65D. A change may be made to provide a sound absorber only for part of the area surrounding the lower belt portion 65D.
(4) In each of Embodiments 1 and 2 described above, the toothed belt 65 is located at the left side of the rear wheel 23, but this is not limitative. That is, the toothed belt 65 may be located to the right side of the rear wheel 23.
(5) In each of Embodiments 1 and 2 described above, the swing arm 21 is supported by the engine unit 15, but this is not limitative. For example, a change may be made so that the swing arm 21 is supported by the body frame 3.
(6) In each of Embodiments 1 and 2 described above, the left swing arm 43 has a curved shape, but this is not limitative. That is, the shape of the left swing arm 43 can be designed or selected as appropriate. For example, the left swing arm 43 may be changed to a linear shape or a rounded shape, or to a shape including both a linear shape and a rounded shape.
(7) In each of Embodiments 1 and 2 described above, the swing arm 21 includes the right swing arm 41 and left swing arm 43, but this is not limitative. For example, a change may be made to omit one of the right swing arm 41 and left swing arm 43.
(8) In each of Embodiments 1 and 2 described above, three discharge bores 76a to 76c are formed in the lower cover 75, but this is not limitative. The number of discharge bores can be changed as appropriate. For example, when foreign objects, water and so on tend to gather in one location, a change may be made to form a single discharge bore in that location. The discharge bore 76a is formed in the bottom wall portion W4, the discharge bore 76b in the recess 75a, and the discharge bore 76c in the bend portion between the bottom wall portion W4 and the lower and outer wall portion W5, but the positions of the discharge bores can be changed as appropriate. For example, the bores may be formed in the lower and outer wall portion W5. Or a change may be made to form discharge bores in the inner cover 71.
(9) In each of Embodiments 1 and 2 described above, the groove 49 is intended for measuring the dimension dL, but this is not limitative. For example, the dimension dL may be changed to a different dimension with reference to the rear edge 43E and corresponding to the distance DL. The dimension dL may be changed to the distance DL from the rear edge 43E of the left swing arm 43 to the axle 45. In this connection, the measuring instrument and the shape of the groove 49 can be changed as appropriate. A similar change can be made to the groove (not shown) of the right swing arm 41.
(10) In each of Embodiments 1 and 2 described above, the groove 49 and the like are formed in both the right swing arm 41 and left swing arm 43, but this is not limitative. For example, when the swing arm 21 has only one of the right swing arm 41 and left swing arm 43, a change may be made to form the groove in that one swing arm.
(11) In each of Embodiments 1 and 2 described above, the groove 49 exemplifies the means for positioning the measuring instrument 111, but this is not limitative. A change may be made to any configuration such as a boss, projection or slit as long as it can position the measuring instrument 111.
(12) A further change may be made in each of the embodiments and the modified embodiments described in sections (1) to (11) above, as appropriate, by replacing each construction with another modification or combining the described constructions. Various other modifications can be made, without being limited to Embodiments 1 and 2 and the modified embodiments described above.

## Claims

1. A two-wheeled motor vehicle (1) comprising:
a swing arm (21) swingable about a pivot shaft (37, 39) coaxial with an output shaft (31) of an engine unit (15);
a drive wheel (23) rotatably supported by a rear portion of the swing arm (21);
a drive pulley (51) mounted on the output shaft (31);
a driven pulley (61) rotatable with the drive wheel (23);
a toothed belt (65) wound around the drive pulley (51) and the driven pulley (61); and
a belt cover (27, 81) for protecting the toothed belt (65);
wherein the belt cover (27, 81) includes:
an inner wall portion (W1) facing the toothed belt (65) and vertically ranging from above an upper belt portion (65U) of the toothed belt (65) to below a lower belt portion (65D) of the toothed belt (65) thereby separating the toothed belt (65) and the drive wheel (23);
an upper wall portion (W2) located above the upper belt portion (65U); and
a bottom wall portion (W4) located below the lower belt portion (65D).

2. A two-wheeled motor vehicle (1) according to claim 1, wherein the drive wheel and
a forward portion of the swing arm (21) are located, in plan view, at one side of the toothed belt (65), and
a rearward portion of the swing arm (21) is located, in plan view, at the other side of the toothed belt (65), the other side being opposite the one side of the toothed belt (65), whereby the swing arm (21) crosses the toothed belt (65) in plan view; and the inner wall portion (W1) located at said one side of the toothed belt (65)

3. A two-wheeled motor vehicle (1) according to claim 2, wherein the inner wall portion (W1) is located at said one side of the toothed belt (65) and vertically ranging from above the upper belt portion (65U) of the toothed belt (65) passing, in side view, above an imaginary line (L) extending through a center of rotation of the drive pulley (51) and a center of rotation of the driven pulley (61), to below a lower belt portion (65D) of the toothed belt (65) passing, in side view, below the imaginary line (L), thereby separating the toothed belt (65) and the drive wheel (23).

4. A two-wheeled motor vehicle (1) according to any one of claims 1 to 3, wherein the belt cover (27, 81) includes an upper and outer wall portion (W3) located at the other side opposite the one side of the upper belt portion (65U).

5. A two-wheeled motor vehicle (1) according to claim 4, wherein the upper and outer wall portion (W3) is formed from the upper wall portion (W2) to a position adjacent an upper end of the swing arm (21);
the inner wall portion (W1), the upper wall portion (W2) and the upper and outer wall portion (W3) surrounding the upper belt portion (65U).

6. A two-wheeled motor vehicle (1) according to any one of claims 1 to 5, wherein the belt cover (27, 81) includes a lower and outer wall portion (W5) located at the other side opposite the one side of the lower belt portion (65D).

7. A two-wheeled motor vehicle (1) according to claim 6, wherein the lower and outer wall portion (W5) is formed from the bottom wall portion (W4) to a position adjacent a lower end of the swing arm (21);
the inner wall portion (W1), the bottom wall portion (W4) and the lower and outer wall portion (W5) surrounding the lower belt portion (65D).

8. A two-wheeled motor vehicle (1) according to any one of claims 1 to 7, wherein the bottom wall portion (W4) has discharge bores (76a, 76b, 76c).

9. A two-wheeled motor vehicle (1) according to any one of claims 1 to 8, wherein the belt cover (27, 81) has an upper sound absorber (83) disposed in a position opposed to the upper belt portion (65U).

10. A two-wheeled motor vehicle (1) according to any one of claims 1 to 9, wherein the belt cover (27, 81) has a lower sound absorber (84) disposed in a position opposed to the lower belt portion (65D).

11. A two-wheeled motor vehicle (1) according to any one of claims 1 to 10, wherein the belt cover (27, 81) has a swing arm sound absorber (85) disposed in a position opposed to the swing arm (21).

12. A two-wheeled motor vehicle (1) according to any one of claims 1 to 11, wherein the belt cover (27, 81) includes an inner cover (71), an upper cover (73) and a lower cover (75) separable from one another, the inner wall portion (W1) being formed on the inner cover (71), the upper wall portion (W2) being formed on the upper cover (73), and the bottom wall portion (W4) being formed on the lower cover (75).

13. A two-wheeled motor vehicle (1) according to any one of claims 1 to 12, comprising an axle (45, 91) held by the rearward portion of the swing arm (21) for rotatably supporting the drive wheel (23);
wherein the axle (45, 91) includes:
a tubular member (93) having a hollow interior; and
a vibration absorber (95) disposed in the interior of the tubular member (93).

14. A two-wheeled motor vehicle (1) according to any one of claims 1 to 13, comprising an axle (45, 91) held by the rearward portion of the swing arm (21) for rotatably supporting the drive wheel (23);
wherein the swing arm (21) has a guide portion (49) for positioning a measuring instrument (111) for measuring a distance (DR, DL) from a rear edge (41 E, 43E) of the swing arm (21) to the axle (45, 91) or measuring a dimension (dR, dL) with reference to the rear edge (41 E, 43E) and corresponding to the distance (DR, DL).

15. A two-wheeled motor vehicle (1) according to claim 14, wherein the guide portion is a groove (49) extending along the imaginary line (L) in side view, with one end of the groove (49) reaching the rear edge (41E, 43 E) of the swing arm (21).

## Patentansprüche

1. Ein Zwei-Rad-Motorfahrzeug (1), das umfasst:
einen Schwing-Arm (21), schwenkbar um eine Schwenk-Welle (37, 39), koaxial mit einer Ausgangs-Welle (31) einer Motoreinheit (15);
ein Antriebsrad (23), drehbar durch einen hinteren Abschnitt des Schwing-Arms (21) gelagert;
eine antreibende Scheibe (51), montiert auf der Ausgangs-Welle (31);
eine angetriebene Scheibe (61), drehbar mit dem Antriebsrad (23);
einen Zahnriemen (65), gewickelt um die antreibende Scheibe (51) und die angetriebene Scheibe (61);
und
eine Riemen-Abdeckung (27, 81) zum Schützen des Zahnriemens (65);
wobei die Riemen-Abdeckung (27, 81) beinhaltet:
inen inneren Wandabschnitt (W1), gegenüber zu dem Zahnriemen (65) und vertikal erstreckend von oberhalb eines oberen Riemenabschnitts (65U) des Zahnriemens (65) zu unterhalb eines unteren Riemenabschnitts (65D) des Zahnriemens (65), um dadurch den Zahnriemen (65) und das Antriebsrad (23) von einander zu trennen;
einen oberen Wandabschnitt (W2), angeordnet oberhalb des oberen Riemenabschnitts (65U); und
einen unteren Wandabschnitt (W4), angeordnet unterhalb des unteren Riemenabschnitts (65D).

2. Ein Zwei-Rad-Motorfahrzeug (1) gemäß Anspruch 1, wobei das Antriebsrad und ein vorderer Abschnitt des Schwing-Arms (21) in einer Draufsicht an einer Seite des Zahnriemens (65) angeordnet sind,
ein hinterer Abschnitt des Schwing-Arms (21) in einer Draufsicht an der anderen Seite des Zahnriemens (65) angeordnet ist, die andere Seite ist gegenüber zu der einen Seite des Zahnriemens (65), wodurch der Schwing-Arm (21) den Zahnriemens (65) in der Draufsicht überkreuzt; und der innere Wandabschnitt (W1) ist an dieser einen Seite des Zahnriemens (65) angeordnet.

3. Ein Zwei-Rad-Motorfahrzeug (1) gemäß Anspruch 2, wobei der innere Wandabschnitt (W1) an dieser einen Seite des Zahnriemens (65) angeordnet ist und vertikal fluchtet von oberhalb des oberen Riemenabschnitts (65U) des Zahnriemens (65), der in der Seitenansicht oberhalb einer imaginären Linie (L), die sich durch ein Dreh-Zentrum der antreibenden Scheibe (51) und ein Dreh-Zentrum der angetriebenen Scheibe (61) erstreckt, hindurchtritt zu unterhalb eines unteren Riemenabschnitts (65D) des Zahnriemens (65), der in sich in der Seitenansicht unterhalb der imaginären Linien hindurchtritt, wodurch der Zahnriemen (65) und das Antriebsrad (23) getrennt sind.

4. Ein Zwei-Rad-Motorfahrzeug (1) gemäß irgendeinem der Ansprüche 1 bis 3, wobei die Riemen-Abdeckung (27, 81) einen oberen und äußeren Wandabschnitt (W3) beinhaltet, angeordnet an der anderen Seite gegenüber zu der einen Seite des oberen Riemenabschnitts (65U).

5. Ein Zwei-Rad-Motorfahrzeug (1) gemäß Anspruch 4, wobei der obere und untere Wandabschnitt (W3) aus dem oberen Wandabschnitt (W2) und einem Abschnitt, benachbart zu einem oberen Ende des Schwing-Arms (21), gebildet ist;
der innere Wandabschnitt (W1), der obere Wandabschnitt (W2) und der obere und untere Wandabschnitt (W3) umgeben den oberen Riemenabschnitt (65U).

6. Ein Zwei-Rad-Motorfahrzeug (1) gemäß irgendeinem der Ansprüche 1 bis 5, wobei die Riemen-Abdeckung (27, 81) einen unteren und äußeren Wandabschnitt (W5), angeordnet an der anderen Seite, gegenüber zu der einen Seite des unteren Riemenabschnitts (65D), beinhaltet.

7. Ein Zwei-Rad-Motorfahrzeug (1) gemäß Anspruch 6, wobei der untere und äußere Wandabschnitt (W5) aus dem unteren Wandabschnitt (W4) zu einer Position, benachbart einem unteren Ende des Schwenkarms (21), ausgebildet ist;
der innere Wandabschnitt (W1), der untere Wandabschnitt (W4) und der untere und äußere Wandabschnitt (W5) umgeben den unteren Riemenabschnitt (65D).

8. Ein Zwei-Rad-Motorfahrzeug (1) gemäß irgendeinem der Ansprüche 1 bis 7, wobei der untere Wandabschnitt (W4) Ablassbohrungen (76a, 76b, 76c) hat.

9. Ein Zwei-Rad-Motorfahrzeug (1) gemäß irgendeinem der Ansprüche 1 bis 8, wobei die Riemen-Abdeckung (87, 81) einen oberen Geräuschabsorbierer (83), angeordnet in einer Position gegenüber zu dem oberen Riemenabschnitt (65U), hat.

10. Ein Zwei-Rad-Motorfahrzeug (1) gemäß irgendeinem der Ansprüche 1 bis 9, wobei die Riemen-Abdeckung (27, 81) einen unteren Geräuschabsorbierer (84), angeordnet in einer Position gegenüber zu den unteren Riemenabschnitt (65D), hat.

11. Ein Zwei-Rad-Motorfahrzeug (1) gemäß irgendeinem der Ansprüche 1 bis 10, wobei die Riemen-Abdeckung (27, 81) einen Schwing-Arm-Geräuschabsorber (85), angeordnet in einer Position gegenüber zu dem Schwing-Arm (21), hat.

12. Ein Zwei-Rad-Motorfahrzeug (1) gemäß irgendeinem der Ansprüche 1 bis 11, wobei die Riemen-Abdeckung (27, 81) eine innere Abdeckung (71), eine obere Abdeckung (73) und eine untere Abdeckung (75), getrennt voneinander, beinhaltet, der innere Wandabschnitt (W1) ist an der inneren Abdeckung (71) ausgebildet, der obere Wandabschnitt (W2) ist an der oberen Abdeckung (73) ausgebildet und der untere Wandabschnitt (W4) ist an der unteren Abdeckung (75) ausgebildet.

13. Ein Zwei-Rad-Motorfahrzeug (1) gemäß irgendeinem der Ansprüche 1 bis 12, die eine Achse (45, 91) zum Halten eines hinteren Abschnitt des Schwing-Arms (21), zur drehbaren Lagerung des Antriebsrads (23), umfasst;
wobei die Achse (45, 91) beinhaltet:
ein Rohrelement (93), das ein hohles Inneres hat; und
einen Vibrationsabsorbierer (95), angeordnet in dem Inneren des Rohrelements (93).

14. Ein Zwei-Rad-Motorfahrzeug (1) gemäß irgendeinem der Ansprüche 1 bis 13, das eine Achse (45, 91), gehalten durch den hinteren Abschnitt des Schwing-Arms (21), zum drehbaren Lagern des Antriebsrads (23), umfasst;
wobei der Schwing-Arm (21) einen Führungsabschnitt (49) zum Positionieren eines Messinstruments (111), zum Messen eines Abstands (DR, DL) von einer hinteren Kante (41 E, 43E) des Schwing-Arms (21) zu der Achse (45; 41) oder zum Messen einer Abmessung (dR, dL) mit Bezug auf die hintere Kante (41 E, 43E) und entsprechend zu dem Abstand (DR, DL), hat.

15. Ein Zwei-Rad-Motorfahrzeug (1) gemäß Anspruch 14, wobei der Führungsabschnitt eine Nut (49) ist, die sich entlang einer imaginären Linie (L), in der Seitenansicht mit einem Ende der Nut (49) wie das hintere Ende (41E, 43E) des Schwing-Arms (21) erreicht, erstreckt.

## Revendications

1. Véhicule deux-roues à moteur (1) comprenant :
un bras oscillant (21) pouvant osciller autour d'un arbre formant pivot (37, 39) coaxial par rapport à un arbre de sortie (31) d'un bloc-moteur (15) ;
une roue motrice (23) soutenue de manière rotative par une partie arrière du bras oscillant (21) ;
une poulie motrice (51) montée sur l'arbre de sortie (31) ;
une poulie entraînée (61) pouvant tourner avec la roue motrice (23) ;
une courroie dentée (65) enroulée autour de la poulie motrice (51) et de la poulie entraînée (61) ; et
un capot de courroie (27, 81) pour protéger la courroie dentée (65) ;
où le capot de courroie (27, 81) comprend :
une partie de paroi interne (W1) faisant face à la courroie dentée (65) et s'étendant verticalement du dessus d'une partie de courroie supérieure (65U) de la courroie dentée (65) jusqu'au-dessous d'une partie de courroie inférieure (65D) de la courroie dentée (65) séparant de là la courroie dentée (65) et la roue motrice (23) ;
une partie de paroi supérieure (W2) située au-dessus de la partie de courroie supérieure (65U) ; et
une partie de paroi de fond (W4) située en-dessous de la partie de courroie inférieure (65D).

2. Véhicule deux-roues à moteur (1) selon la revendication 1, où la roue motrice et une partie avant du bras oscillant (21) sont situées, en vue en plan, sur un côté de la courroie dentée (65), et
une partie arrière du bras oscillant (21) est située, en vue en plan, de l'autre côté de la courroie dentée (65), l'autre côté étant opposé au côté de la courroie dentée (65), moyennant quoi le bras oscillant (21) traverse la courroie dentée (65) en vue en plan ; et
la partie de paroi interne (W1) est située au niveau dudit un côté de la courroie dentée (65).

3. Véhicule deux-roues à moteur (1) selon la revendication 2, où la partie de paroi interne (W1) est située au niveau dudit un côté de la courroie dentée (65) et s'étendant verticalement du dessus de la partie de courroie supérieure (65U) de la courroie dentée (65) passant, en vue latérale, au-dessus d'une ligne imaginaire (L) s'étendant à travers un centre de rotation de la poulie motrice (51) et un centre de rotation de la poulie entraînée (61), jusqu'en-dessous d'une partie de courroie inférieure (65D) de la courroie dentée (65) passant, en vue latérale, sous la ligne imaginaire (L), séparant de là la courroie dentée (65) et la roue motrice (23).

4. Véhicule deux-roues à moteur (1) selon l'une quelconque des revendications 1 à 3, où le capot de courroie (27, 81) comprend une partie de paroi supérieure et extérieure (W3) située au niveau de l'autre côté opposé au côté de la partie de courroie supérieure (65U).

5. Véhicule deux-roues à moteur (1) selon la revendication 4, où la partie de paroi supérieure et extérieure (W3) est formée à partir de la partie de paroi supérieure (W2) jusqu'à une position adjacente à une extrémité supérieure du bras oscillant (21) ;
la partie de paroi interne (W1), la partie de paroi supérieure (W2) et la partie de paroi supérieure et extérieure (W3) entourant la partie de courroie supérieure (65U).

6. Véhicule deux-roues à moteur (1) selon l'une quelconque des revendications 1 à 5, où le capot de courroie (27, 81) comprend une partie de paroi inférieure et extérieure (W5) située au niveau de l'autre côté opposé au côté de la partie de courroie inférieure (65D).

7. Véhicule deux-roues à moteur (1) selon la revendication 6, où la partie de paroi inférieure et extérieure (W5) est formée à partir de la partie de paroi de fond (W4) jusqu'à une position adjacente à une extrémité inférieure du bras oscillant (21) ;
la partie de paroi interne (W1), la partie de paroi de fond (W4) et la partie de paroi inférieure et extérieure (W5) entourant la partie de courroie inférieure (65D).

8. Véhicule deux-roues à moteur (1) selon l'une quelconque des revendications 1 à 7, où la partie de paroi de fond (W4) présente des trous d'évacuation (76a, 76b, 76c) .

9. Véhicule deux-roues à moteur (1) selon l'une quelconque des revendications 1 à 8, où le capot de courroie (27, 81) présente un silencieux supérieur (83) disposé en une position opposée à la partie de courroie supérieure (65U).

10. Véhicule deux-roues à moteur (1) selon l'une quelconque des revendications 1 à 9, où le capot de courroie (27, 81) présente un silencieux inférieur (84) disposé en une position opposée à la partie de courroie inférieure (65D).

11. Véhicule deux-roues à moteur (1) selon l'une quelconque des revendications 1 à 10, où le capot de courroie (27, 81) a un silencieux de bras oscillant (85) disposé en une position opposée à celle du bras oscillant (21).

12. Véhicule deux-roues à moteur (1) selon l'une quelconque des revendications 1 à 11, où le capot de courroie (27, 81) comprend un capot interne (71), un capot supérieur (73) et un capot inférieur (75) séparables l'un de l'autre, la partie de paroi interne (W1) étant formée sur le capot interne (71), la partie de paroi supérieure (W2) étant formée sur le capot supérieur (73), et la partie de paroi de fond (W4) étant formée sur le capot inférieur (75).

13. Véhicule deux-roues à moteur (1) selon l'une quelconque des revendications 1 à 12, comprenant un axe (45, 91) maintenu par la partie arrière du bras oscillant (21) pour soutenir de manière rotative la roue motrice (23) ;
où l'axe (45, 91) comprend :
un élément tubulaire (93) ayant un intérieur creux ; et
un amortisseur de vibrations (95) disposé à l'intérieur de l'élément tubulaire (93).

14. Véhicule deux-roues à moteur (1) selon l'une quelconque des revendications 1 à 13, comprenant un axe (45, 91) maintenu par la partie arrière du bras oscillant (21) pour soutenir de manière rotative la roue motrice (23) ;
où le bras oscillant (21) a une partie formant guide (49) pour le positionnement d'un instrument de mesure (111) pour mesurer une distance (DR, DL) à partir d'un bord arrière (41E, 43E) du bras oscillant (21) à l'axe (45, 91) ou pour mesurer une dimension (dR, dL) en référence au bord arrière (41E, 43E) et correspondant à la distance (DR, DL).

15. Véhicule deux-roues à moteur (1) selon la revendication 14, où la partie formant guide est une rainure (49) s'étendant le long de la ligne imaginaire (L) en vue latérale, avec une extrémité de la rainure (49) atteignant le bord arrière (41E, 43E) du bras oscillant (21).
